# EUROPEAN PATENT SPECIFICATION

(11) **EP 1 766 283 B1**
(45) Date of publication and mention of the grant of the patent: **18.03.2009**
(21) Application number: 05759439.2
(22) Date of filing: 12.07.2005
(51) Int. Cl.: F16L 37/00, B64D 39/06

(54) **COUPLING ASSEMBLY**
KUPPLUNGSANORDNUNG
ENSEMBLE RACCORD

(30) Priority: 13.07.2004 GB 0415637; 27.09.2004 GB 0421442
(43) Date of publication of application: 28.03.2007
(73) Proprietor: SELF-ENERGISING COUPLING COMPANY LIMITED, Northwich, Cheshire CW9 7NN (GB)
(72) Inventor: READMAN, Matthew, Joseph, Prestwich, Manchester M25 1JR (GB)
(74) Representative: Pidgeon, Robert John
(86) International application number: PCT/GB2005/002742
(87) International publication number: WO 2006/005949

(56) References cited:
- GB-A- 2 329 945
- US-A- 2 946 605
- US-A- 3 613 726
- US-A- 4 124 228
- US-A- 4 832 080

## Description

The present invention relates to a coupling assembly. The present invention is particularly suitable for, but not limited to, coupling together fluid passages. The present invention further extends to a method of releasably interconnecting fluid passages.

It is a common requirement in many industries to be able to quickly and releasably interconnect two passages (e.g. pipes or hoses) containing fluids. The range of fluids to be transported, together with their properties, may vary widely, including gases such as air within medical oxygen masks and liquids such as oil within undersea drilling operations. The pressure of the fluid passing through the coupling assembly may vary from substantially the same as the ambient pressure around the assembly in the case of oxygen masks to high-pressure liquids at pressures many times the ambient pressure in the case of oil pipelines.

A number of quick release coupling arrangements are known in the art whereby the ends of fluid passages are provided with corresponding coupling members to facilitate the joining of passages. This may be provided in the form of a female coupling member comprising a socket and a corresponding male coupling member comprising a probe receivable in the socket. The coupling members may further be provided with breakout valves such that when the male and female coupling members are uncoupled the ends are sealed off preventing fluid from escaping.

However, the pressure of the fluid within the coupling assembly can exert pressure upon the end portion of the male coupling member seated within the female coupling member, creating a separation force, which seeks to expel the male coupling member from the female coupling member. The pressure of the fluid is effectively applied upon the whole cross sectional area of the male coupling member at the point where the male coupling member exits the female coupling member. This is a result of the fluid within the whole of the fluid passage being pressurised. The pressure against the remote end of the fluid passage is transmitted to the male coupling.

The separation force applied to the male coupling member is equal to the cross sectional area of the male coupling member at the point where the male coupling member exits the female coupling member multiplied by the pressure of the fluid acting against this cross sectional area. Consequently, the separation force quickly becomes large for high-pressure fluids. The separation force also increases linearly with the diameter of the fluid passage.

A disadvantage of conventional quick release coupling assemblies is that the separation force is typically greater than the frictional force retaining the male coupling member within the female coupling member. Consequently, in order to prevent the coupling assembly from uncoupling it is often necessary to incorporate some additional form of mechanical retention. This may take the form of a screw thread, locking balls, or incorporating flanges upon the male and female coupling members, which are then bolted together.

Such mechanical retention devices may however be, required to break under a predetermined force applied to the coupling assembly. For instance, for air-to-air refuelling operations a tanker aircraft trails a fuel pipeline. At the end of the pipeline remote from the tanker aircraft is a drogue, which comprises the female coupling member. The aircraft to be refuelled is fitted with a forward extending probe, the end of which forms the male coupling member. In order to prevent the coupling assembly from pulling apart during turbulence and with small changes in relative position of the aircraft, the coupling assembly must incorporate some form of retention means. However, in an emergency situation it is essential that the coupling releases under a predetermined force. This force is known as the breakout strength.

This desired breakout strength may be relatively low compared with strength of the mechanical retention device used to overcome the separation force exerted upon the male member by the fluid within the coupling assembly. Consequently, this can lead to the retention device being constrained to only break or release under a higher applied force than would ideally be desirable, due to the design tolerances of the retention device.

The mechanism used to counteract the separation force of a coupling assembly can be separate from the mechanism used to provide the breakout strength, in order that the breakout strength may be set independently.

It is known to reduce the separation forces within coupling assemblies by arranging the assembly such that in addition to, and counteracting, the separation force created by the fluid, a force acting to resist separation is created by the fluid. The coupling assembly is arranged such that it comprises an internal surface upon which fluid exerts pressure of equal area to the cross sectional area of the male coupling member where it exits the female coupling member. Consequently the coupling is said to be "pressure balanced", effectively resulting in a zero net separation force due to the internal fluid pressures. For example, US 4,124,228 describes a pressure balanced fluid coupling, using a locking ball and groove arrangement to allow the coupling members to separate under a predetermined axial separation force.

US patent number 2,946,605 "In-Flight Aircraft Refuelling Apparatus" describes a coupling assembly for air-to-air refuelling comprising male and female coupling members. Upon coupling the leading end of the male member activates a poppet valve within the female member opening the fluid connection. However, the poppet valve remains in the fluid path and as such there are large separation forces acting on both the poppet valve and the male member that seek to uncouple the assembly. In order to overcome these separation forces, upon coupling a small side fluid passage is opened feeding pressurised fuel to a piston which forces a roller against an indentation on the exterior of the male coupling member.

As such this patent discloses a coupling assembly in which a complex mechanical arrangement, activated by the pressure of the fluid, acts to overcome the separation forces within the assembly. However, this is a cumbersome arrangement, with a large number of moving parts over and above the basic elements of the male and female coupling members.

It is an aim of embodiments of the present invention to provide a coupling assembly that overcomes one or more of the problems of the prior art, whether identified above or otherwise.

In a first aspect, the present invention provides a coupling assembly for releasably interconnecting fluid passages, comprising: a female coupling member, a first end of which is arranged for connection to a first fluid passage, and a second end comprising a socket extending along a first longitudinal axis, the female coupling member further comprising an inwardly facing annular sealing ring proximate its second end; a male coupling member, a first end of which is arranged for connection to second fluid passage, and a second end of which comprises a probe receivable in said socket, extending along a second longitudinal axis, the male coupling member further comprising an outwardly facing annular sealing ring proximate its second end; the female coupling member further comprising an inner recess within the socket, extending along the first longitudinal axis, and arranged to receive an end portion of the probe; wherein the coupling members are arranged such that when the coupling members are mated said coupling members provide a conduit for fluid flow between the first and second fluid passages, and the first annular sealing ring provides a seal between the probe and the inner recess, and the second annular sealing ring provides a seal between the probe and the second end of the female coupling member, the conduit therefore having internal surfaces dimensioned such that fluid within the conduit exerts pressure on the internal surfaces to provide a net force resisting separation of said mated coupling members.

Preferably a vent may extend between the inner recess and the ambient environment surrounding the female coupling member, for the release of fluid from the inner recess as the coupling members mate.

Preferably the probe may be of substantially uniform outer diameter, and said socket may be of substantially uniform inner diameter.

Preferably the conduit within the female coupling member may comprise a central bore extending from the first end, and at least one passage that may extend from the central bore, around the inner recess, to said second end.

Preferably the conduit within the male coupling member may comprise a central bore extending from the first end, and at least one passage that may extend from the central bore, transverse the second longitudinal axis to at least one aperture on a side of the probe.

Preferably the retaining means may comprise a pin located within one of said coupling members, and a corresponding slot may be arranged to engage said pin within the other coupling member.

Preferably the female coupling member may comprise an inner recess within the socket, extending along the first longitudinal axis, and arranged to receive an end portion of the probe; and the retaining means may comprise a circular resilient ring of radially variable diameter, located within the inner recess; and the end portion of the probe may further comprise an exterior annular groove arranged to receive the circular ring, for releasably locking the end portion of the probe within the inner recess.

Preferably the female coupling member may comprise an inner recess within the socket, that may extend along the first longitudinal axis, and may be arranged to receive an end portion of the probe; and the retaining means may comprise at least on resiliently biased pin that extends radially into the socket; and the end portion of the probe may further comprise an exterior groove that may be arranged to receive the pin, for releasably locking the end portion of the probe within the inner recess.

Preferably said pin may be resiliently biased by a circular resilient ring that may extend around the circumference of the female coupling member.

Preferably the piston further comprises an exterior annular groove that may be arranged to receive the circular ring, for releasably locking the first breakout valve in the second position.

Preferably the piston may further comprise a third annular sealing ring proximate the piston rod, that may be arranged such that the third annular sealing ring provides a seal between the piston and the inner recess.

Preferably the collar may be resiliently biased to be in said first position.

Preferably the travel of the collar towards the second end may be limited by a change in external diameter of the male coupling member.

Preferably the collar may further comprise a flange extending radially, and the female coupling member may further comprise a groove that extends around a portion of the circumference of the second end of the female coupling member, the groove being arranged to receive the flange when the male and female coupling members are brought together in a relative direction of motion transverse the longitudinal axis of the coupling members.

Preferably at least a portion of one of the groove and the flange is frangible, and may be arranged to break upon application of a predetermined separation force along the longitudinal axis of the coupling members, to allow the separation of mated coupling members.

Preferably the male coupling member may further comprise at least one shut-off valve arranged to seal the at least one aperture when the male coupling member is detached from the female coupling member.

Preferably the at least one shut-off valve may be coupled to the collar, such that the at least one shut-off valve may be held closed when the collar is in its first position.

Preferably the at least one shut-off valve may comprise at least one disc arranged in a closed position to seal said aperture, said disc being attached to an internal surface of said central bore, and resiliently biased such that said disc extends radially outwards from aperture except when held closed by the collar.

Preferably the second end of the male coupling member may further comprise at least one radially extending protrusion having a predetermined size and shape; and the second end of the female coupling member may comprise at least one corresponding recess arranged to receive said protrusion when the probe is received in said socket.

Preferably the coupling assembly may be for providing a conduit for a predetermined fluid, and at least one of the number, position, size and shape of said at least one protrusion may be indicative of the predetermined fluid.

Preferably immediately adjacent to the external sealing ring the probe may taper towards its distal end, and wherein when mated the surface of the socket facing the taper of the probe may also taper.

Preferably immediately adjacent to the internal sealing ring the socket may taper towards its open end, and wherein when mated the surface of the probe facing the taper of the socket may also taper.

Preferably the retaining means comprises a clip. The clip may comprise a resilient material. The clip may comprise first and second sections arranged about opposing sides of the longitudinal axis of the coupling assembly and joined by a connecting section that abuts a flange on the coupling assembly and may further comprise means spaced apart from the connecting section to selectively engage in locking arrangement with the coupling assembly. Preferably the flange may comprise part of the male member and the selectively engaging means comprises part of the female member. The face of the flange in abutment with the connecting section may comprise an oblique face. Preferably the means for selectively engaging with the female member may comprise teeth, said teeth may be removably engaged by pivoting the first and or second sections about the connecting section.

Preferably the male member may comprise at least one aperture in the circumferential face of the probe and may include a valve which prevents fluid egress from the aperture in a closed position and allows fluid egress from the probe in an open position. Preferably the probe includes a bore and the valve is operable within the bore. The valve may be operable between the open position and the closed position by relative linear movement between the probe and valve. The male member may include a biasing means which urges relative movement of the valve within the probe in a first direction and towards the closed position, the closed position being delimited by abutment of the valve with a closed end of the probe. The biasing means may comprise a spring. Preferably the valve may comprise a fluid conduit between a first aperture in communication with the first end of the male member and at least one aperture on a side element of the valve, the valve may further comprise sealing means arranged proximate the valve such that, in the closed position, the aperture on the side element of the valve is sealed by the circumferential face of the bore within the probe and the arrangement of the sealing means, and, in the open position, the aperture on the side element of the valve may be aligned with the aperture in the probe such that fluid can egress the probe.

Preferably the probe may include an engaging means, the engaging means may co-operate with a feature in the female member, said feature being operable in order to effect the relative movement of the valve within the probe. The engaging means may comprise a rack and the co-operating feature in the female member may comprise a cog, the cog being rotationally mounted and operable by a lever, such that when engaged with the rack, rotation of the cog in a first direction results in linear movement of the valve in the first direction and rotation in a second direction effects the relative linear movement of the valve in a second direction, which corresponds to an opening of the valve. The lever may include a ratchet mechanism to selectively prevent rotation of the cog in the second direction, the ratchet mechanism providing break-out strength by failing when the rotating force acting on the cog in the second direction exceeds a known limit.

Preferably the coupling of the male and female member may comprise: an uncoupled position in which the valve is in the closed position and the male and female members are not mated; a first inserted position in which the probe is inserted into the socket, the valve is closed, and the rack begins to engage with the cog; a second inserted position in which the valve is closed and the rack is engaged with the cog such that the probe cannot be disengaged from the socket without overcoming the break-out force of the ratchet mechanism; and an open position in which the valve is open and the male and female members cannot be separated without exceeding the break-out force. Preferably the break-out force may be additionally or alternatively supplied by a break-out pin comprising a pin which is inserted through the ratchet mechanism and held fast to the female member to prevent rotation of the cog, the pin failing at a predetermined force.

Preferably the socket may include at least one aperture in the circumferential wall and the fluid conduit extends between said aperture and the first end of the female member, wherein the female member may include a valve which prevents fluid egress from the aperture in the socket when in a closed position and allows fluid egress in an open position.

Preferably the female member may include a bore coincident with the longitudinal axis of the female coupling member and extending between the socket and the first end of the female member, and the valve is operable within the bore.

Preferably the female member may include at least one aperture on the circumferential face of the bore and a fluid conduit that extends transversely and longitudinally between the aperture on the circumferential face of the bore and the aperture on the circumferential face of the socket, and the valve may include a conduit between a first aperture in communication with the first end of female member and at least one aperture on a side element of the valve, the valve being moveable relative to the socket between a closed position, in which the aperture in the side element of the valve is closed by the circumferential wall of the bore and arrangement of sealing means and an open position in which the aperture in the side element of the valve is aligned with the aperture in the circumferential face of the bore such that fluid can flow into the conduit and egress the socket.

Preferably the female member may include a biasing means which urges relative movement of the valve within the bore in the first direction and towards the closed position. The biasing means may comprise a spring.

Preferably the valve in the female member may include engaging means comprising a rack, which is engageable with a second cog rotationally mounted within the female member such that, when the valve is in the bore, the rack and cog engage and rotation of the second cog in a first direction effects the linear movement towards an open position of the valve and rotation in a second direction effects the linear movement of the valve towards the closed position of the valve. The engaging means on the valve within the probe may include a second rack, which begins to engage with a second cog when the male member is in the second inserted position such that further relative movement of the valve within the probe in the second, opening direction of the valve within the probe, imparts a rotation force on the second cog and in the first, opening direction of the valve within the female member.

In contrast to other coupling arrangements, rather than creating a separation force or pressure balanced system, fluid pressure within the coupling assembly is arranged to energise the assembly, providing a net force resisting separation of the male and female coupling members. By control of the dimensions within the assembly, this net force (the "pull out" strength) can be set at a desired breakout strength, or set relatively low, with the desired breakout strength set by an alternative mechanism.

In a second aspect, the present invention provides a method of releasably interconnecting fluid passages by inserting a male coupling member into a corresponding female coupling member, the female coupling member having a first end connected to a first fluid passage, and a second end comprising a socket extending along a first longitudinal axis and having a proximal second, internal, sealing ring, the socket including an inner recess, extending along the first longitudinal axis; the male coupling member having a first end connected to a second fluid passage, and a second end comprising a probe receivable in said socket, extending along a second longitudinal axis and having a proximal first, external, annular sealing ring; the method comprising: inserting the probe into said socket, so as to provide a conduit between the first and second fluid passages, wherein the first annular sealing ring provides a seal between the probe and the inner recess, and the second annular sealing ring provides a seal between the probe and the second end of the female coupling member, the conduit therefore having internal surfaces dimensioned such that fluid within the conduit exerts pressure on the internal surfaces to provide a net force resisting separation of said mated coupling members.

Further aspects and features are set forth in the accompanying claims, to which reference should now be made.

Other aims and advantages of the present invention will become apparent from the following description.

Specific embodiments of the present invention will now be described, by way of example only, with reference to the accompanying drawings, in which:
Figure 1 is a schematic cross sectional view of a first embodiment of the present invention;
Figure 2 is a schematic cross sectional view of the female coupling member of a second embodiment of the present invention;
Figure 3 is a cross sectional view of the device of Figure 2 along the line A-A in the direction of the arrows;
Figure 4 is a cross sectional view of the device of Figure 2 along the line B-B in the direction of the arrows;
Figure 5 is an exploded schematic cross sectional view of the second embodiment of the present invention;
Figure 6 is a schematic cross sectional view of the second embodiment of the present invention depicting the male and female coupling members mated together;
Figure 7 is a schematic cross sectional view of a third embodiment of the present invention;
Figure 8 is a schematic cross sectional view of a third embodiment of the present invention depicting the male and female coupling members mated together;
Figure 9 is an exploded schematic cross sectional view of a fourth embodiment of the present invention;
Figure 10 is a schematic cross sectional view of a fourth embodiment of the present invention depicting the male and female coupling members mated together;
Figure 11 is an exploded schematic cross sectional view of a fifth embodiment of the present invention;
Figure 12 is a schematic cross sectional view of a fifth embodiment of the present invention depicting the male and female coupling members mated together;
Figure 13 is an enlarged view of a portion of a sixth embodiment of the present invention corresponding to portion C of Figure 11;
Figure 14 is an enlarged view of a portion of a seventh embodiment of the present invention corresponding to portion C of Figure 11;
Figure 15 is a schematic cross sectional view of an eighth embodiment of the present invention depicting the male and female coupling members mated together;
Figure 16 is a schematic cross sectional view of an eighth embodiment of the present invention depicting the male and female coupling members during a decoupling procedure.
Figure 17 is an exploded schematic cross sectional view of an eighth embodiment of the present invention;
Figure 18 is an exploded schematic cross sectional view of a ninth embodiment of the present invention;
Figure 19 is a schematic cross sectional view of a ninth embodiment of the present invention depicting the male and female coupling members mated together;
Figure 20 is a schematic cross sectional view of a tenth embodiment of the present invention;
Figures 21A-21D are schematic perspective cross sectional views of an eleventh embodiment of the present invention, indicating the progressive insertion of securing pins;
Figures 22A and 22B are schematic side cross sectional views of a twelfth embodiment of the present invention;
Figures 23A and 23B are end crossed sectional views of the twelfth embodiment;
Figure 24 is a cross sectional view of a thirteenth embodiment of the present invention;
Figure 25 is an exploded cross sectional view of a fourteenth embodiment of the present invention;
Figure 26 is a cross sectional view of the fourteenth embodiment of the present invention;
Figure 27 is a cross sectional view of the fourteenth embodiment along line A-A of Figure 25.
Figure 28 is a front view of a fifteenth embodiment in the mated position.
Figure 29 is a cross sectional view of the fifteenth embodiment in the mated and open fluid position.
Figure 30 is a cross sectional view of the fifteenth embodiment in the mated and closed fluid position.
Figure 31 is a cross sectional view of the fifteenth embodiment in the unmated position.

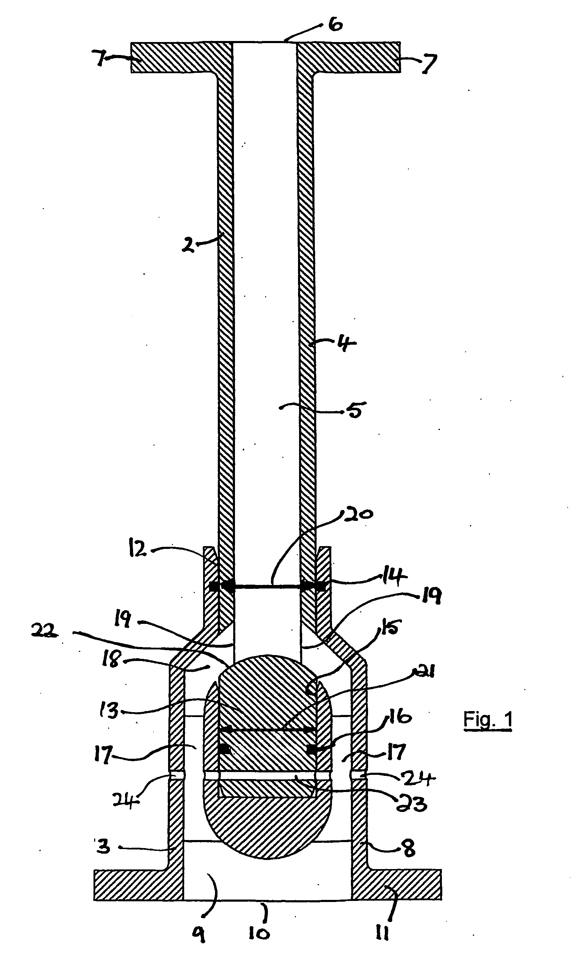

Referring first to figure 1, this illustrates a coupling assembly 1 comprising a male coupling member 2 and a female coupling member 3. Figure 1 depicts the coupling assembly 1 in cross section along the longitudinal axes of the male and female coupling members 2, 3. The longitudinal axis of the coupling assembly 1 is defined as being the axis along which the male coupling member 2 is inserted or withdrawn. In a coupling assembly in accordance with the first embodiment of the present invention the longitudinal axis of the coupling assembly 1 is coincident with the longitudinal axis of the male and female coupling members 2, 3. Both coupling members 2, 3 are symmetrical about their longitudinal axes. Male coupling member 2 and female coupling member 3 are shown mated together.

The male coupling member 2 comprises a substantially cylindrical tube having sidewall 4 defining a central bore 5 extending along its longitudinal axis. The male coupling member 2 has a first end 6, which is adapted to communicate with a first fluid passage (not shown). The first end 6 of the male coupling member 2 may be coupled to the first fluid passage via entirely conventional means such as are known in the art. Figure 1 depicts this as a flange 7, suitably arranged such that it may be attached to a similar flange at an end of the first fluid passage via bolts or the like. A second end of the male member 2 is formed as a probe, for insertion into the female member 3.

The female coupling member 3 similarly comprises a substantially cylindrical tube having a sidewall 8 and a central bore 9 extending along its longitudinal axis. The female coupling member 3 has a first end 10, adapted to communicate with a second fluid passage (not shown) via flange 11.

The second end of the female coupling member 3 comprises socket 12 suitably sized such that it receives the second end of the male coupling member 2 forming a probe, and forms a fluid seal with the external surface of the sidewall 4 of the male coupling member 2. Disposed around the inside of the socket 12 is annular sealing ring 14. Annular sealing ring 14 is seated within the internal circumference of socket 12 within an annular groove. Annular sealing ring 14 ensures a seal between the coupling members 2, 3, to prevent the fluid within the coupling assembly 1 escaping from the join between the coupling members 2, 3. Male coupling member 2 and female coupling member 3 effectively from a hydraulic piston at the point of annular sealing ring 14 within the socket 12 of the female coupling member 3.

The female coupling member 3 further comprises an inner recess 15 located upon the longitudinal axis of the coupling assembly 1. The inner recess 15 is arranged to receive an end portion 13 of the male coupling member 2. End portion 13 of male coupling member 2 effectively forms a hydraulic piston within the inner recess 15. In order to ensure a tight seal between the inner recess 15 and the end portion 13 of the male coupling member 2 the outer circumference of the second end 13 incorporates an annular sealing ring 16 seated within an annular groove. Annular sealing ring 16 prevents fluid within the coupling assembly 1 from passing from the central bores 5, 9 of the coupling members 2, 3 into the inner recess 15.

Inner recess 15 further comprises a vent (not shown in figure 1) such that it is in communication with the ambient environment surrounding the female coupling member 3. As the male member 2 is inserted into female coupling member 3, and the end portion 13 of male coupling member 2 is introduced into the inner recess 15, fluid will be driven out of the inner recess 15 via the vent (and released to the ambient environment). In the event of fluid within the coupling assembly 1 leaking past the annular sealing ring 16, this fluid will pass through the vent to the ambient environment. Any cavity within the inner recess 15 during insertion of the male coupling member 2 (and the vent itself) will be substantially at the pressure of the ambient environment. The vent thus prevents fluid building up within the inner recess 15, and providing a separation force acting upon the second end 13 of the male coupling member 2.

Inner recess 15 is attached to the sidewall 8 of female coupling member 3 via webs (not shown in Figure 1). Interspaced between the webs are passages 17 arranged such that fluid may pass from the first end of the female coupling member 3 to the mouth 12 via the central bore 9 and passages 17. A number of passages 17 are disposed around the inner recess 15. Passages 17 run substantially parallel to the longitudinal axis of the coupling assembly 1. At point 18 the passages 17 converge in an open annular space around the male coupling member 2 (when the coupling members 2, 3 are mated).

Male coupling member 2 further comprises two passages 19 extending radially from the central bore 5 to apertures on the side of the male coupling member. When mated passages 19 connect with the annular space 18 within the female coupling member 3. The second end of the male coupling member is closed off, such that fluid within the central bore 5 can only exit the male coupling member 2 via radial passages 19. When the coupling members 2, 3 are mated fluid flow between the coupling members 2, 3 is transverse to the longitudinal axis of the coupling assembly 1, such that this does not exert a separating force.

Fluid within the coupling assembly 1 will exert an equal pressure in all directions upon the coupling members 2, 3. The force applied to the ends of the coupling members 2, 3 is equal to the fluid pressure multiplied by the total areas of the internal surfaces of the coupling members. It is the cross sectional area of the surfaces (i.e. the component of the surface areas extending perpendicular to the longitudinal axis) that is of particular interest, as only the component of force applied by fluid pressure acting parallel to the longitudinal axis of the coupling assembly 1 contributes to the separation force. If the female coupling member 3 is held stationary then the separation force is the product of the fluid pressure and the cross sectional area of the probe part of the male coupling member 2 within socket 12 at the point where it exits the female coupling member 3, namely adjacent annular sealing ring 14. This cross sectional area is identified by section 20. This cross sectional area 20 does not include the cross sectional area of the annular sealing ring 14 as this forms part of the female coupling member 3.

The probe part of male coupling member 2 is of substantially uniform outer diameter and socket 12 is of substantially uniform inner diameter. Cross sectional area 21 is defined across end portion 13 of the male coupling member 2. However, as annular sealing ring 16 forms part of the male member 2 then this must be incorporated into this cross sectional area 21. It is therefore clear that area 21 is larger than area 20 by the cross sectional area of annular sealing ring 16. When coupling or uncoupling the coupling assembly 1 annular sealing ring 16 is able to pass ring 14 as at least one ring (generally, both) is composed of a resilient material.

Fluid pressure acts against cross sectional area 21 as it is incident upon internal surface 22 of the inside portion of the male coupling member 2. As inner recess 15 is vented to the ambient environment then fluid pressure against area 21 forces the second end 13 of male coupling member 2 into the inner recess 15. Consequently, fluid pressure provides a force acting upon the male coupling member 2, forcing it into the female coupling member. As this force is equal to the product of the pressure and the cross sectional area, and area 21 is larger than area 20, then the force holding the coupling assembly 1 together will be greater than the separation force.

The result of this arrangement of forces is that when the coupling members 2, 3 are coupled the separation force is over balanced i.e. the net force resists separation of the coupling assembly. The coupling assembly 1 may thus be considered to be self-energising. This is a highly stable arrangement. As areas 20 and 21 are constant, if any change in fluid pressure occurs the net force will still resist separation of the mated coupling members, as the force component pulling the members together will always remain greater than the separation force component.

Figure 1 also shows passages 23 passing through the end portion 13 of male coupling member 2 (not communicating with central bore 5). When the coupling members are fully mated then passage 23 aligns with passage 24 within the sidewall 8 of female coupling member 3 (not communicating with passages 17). A pin (not shown) may be passed through passages 23 and 24, providing a coupling assembly retaining means. Thus male coupling member 2 is prevented from uncoupling from female coupling member 3 unless the pin is broken (or removed). The pin provides breakout strength for the coupling assembly. The pin can be formed of any suitable material and formed of a suitable diameter, such that it is arranged to break at a predetermined break out strength for the chosen application of the coupling assembly 1.

The pin may be passed through passages 23 and 24 once the coupling members 2, 3 have been mated, as illustrated in Figure 1. Alternatively the pin may be permanently positioned within passages 24 intersecting the cavity within the inner recess 15 when the coupling assembly 1 is uncoupled. In the latter case, passage 23 is formed as a slot corresponding to the pin within end portion 13, extending to the second end of the male coupling member 2 with a partial rotation. The male coupling member 2 may then be attached to the pin by pushing the male coupling member 2 into the inner recess 15 along the longitudinal axis of the coupling assembly and then rotating the male coupling member 2 by a predetermined amount, such that the slot engages the pin, and the male coupling member can not be retracted without a further reverse rotation.

The pin may also be combined with the vent, in which case the pin is a hollow tube with at least one radially extending opening within the inner recess 15 communicating with the ambient environment.

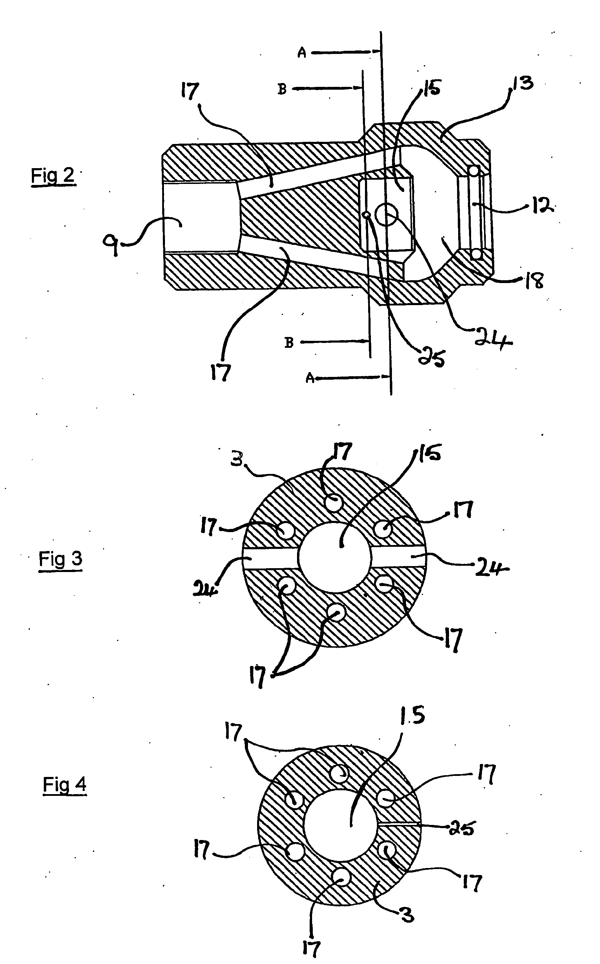

Referring now to Figure 2 this illustrates the female coupling member 3 according to a second embodiment of the present invention. In this embodiment the female coupling member is generally the same as in the first embodiment, with the exception that at least a portion of the passages 17 passing around inner recess 15 are angled (i.e. not perpendicular to or parallel with) with respect to the longitudinal axis of the coupling assembly. This is advantageous in that the diameter of the female coupling member 3 may be reduced at the position at which it meets the pipe. Additionally, the flow rate of fluid through the coupling assembly is increased, owing to a smooth fluid flow path through the female coupling member.

Figure 2 further illustrates passage 24, for passing a pin to provide breakout strength for the coupling assembly 1. Figure 2 is rotated 90° about the longitudinal axis of the coupling assembly from the equivalent cross sectional view of Figure 1.

Figure 3 illustrates the arrangement of passages 17 about the longitudinal axis of the coupling assembly 1, and passage 24. It can be seen from Figure 3 that passages 17 and passage 24 do not connect.

Figure 4 illustrates passages 17, and vent 25 connecting inner recess 15 to the ambient environment. It can be seen from Figure 4 that passages 17 and vent 25 do not meet.

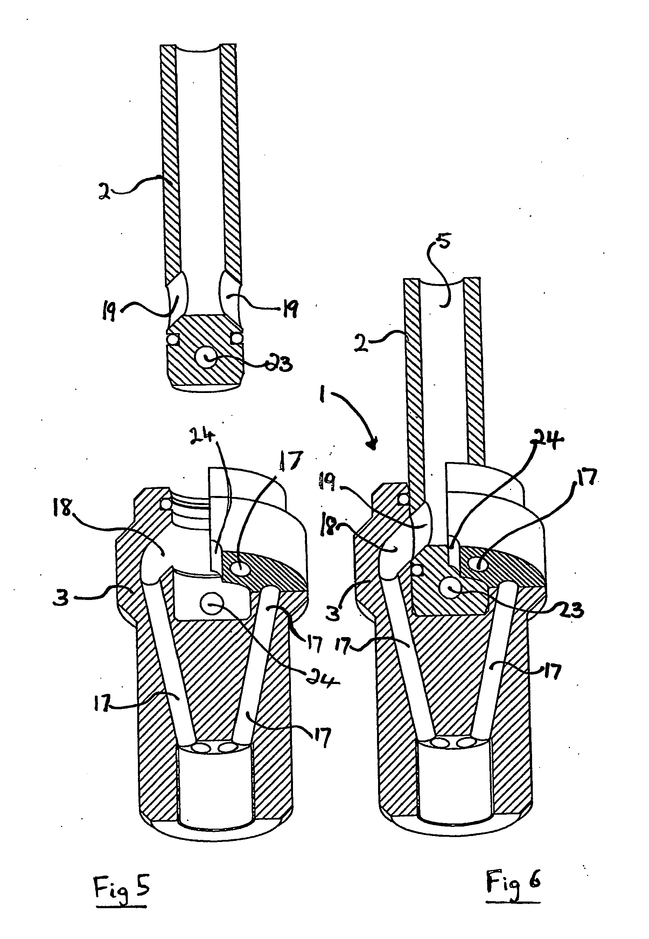

Figures 5 and 6 illustrate the second embodiment of the present invention with the female coupling member 3 and the male coupling member 2 respectively uncoupled and mated together. Passages 19 are angled with respect to the longitudinal axis of the coupling assembly 1. As is shown in Figure 6 passages 19 align with annular space 18 within the female coupling member 3, such that the flow rate of fluid within the coupling assembly is increased, as described above.

In Figures 5 and 6, the lower portion of female coupling member 3 is shown in partial quadrant view, such that the relative positions of the passages 17 and passages 23 and 24 may be more readily appreciated.

With the exception of the above listed changes, the configuration and operation of the coupling assembly 1 of the second embodiment is otherwise unchanged from that of the first embodiment. Identical reference numerals represent similar features.

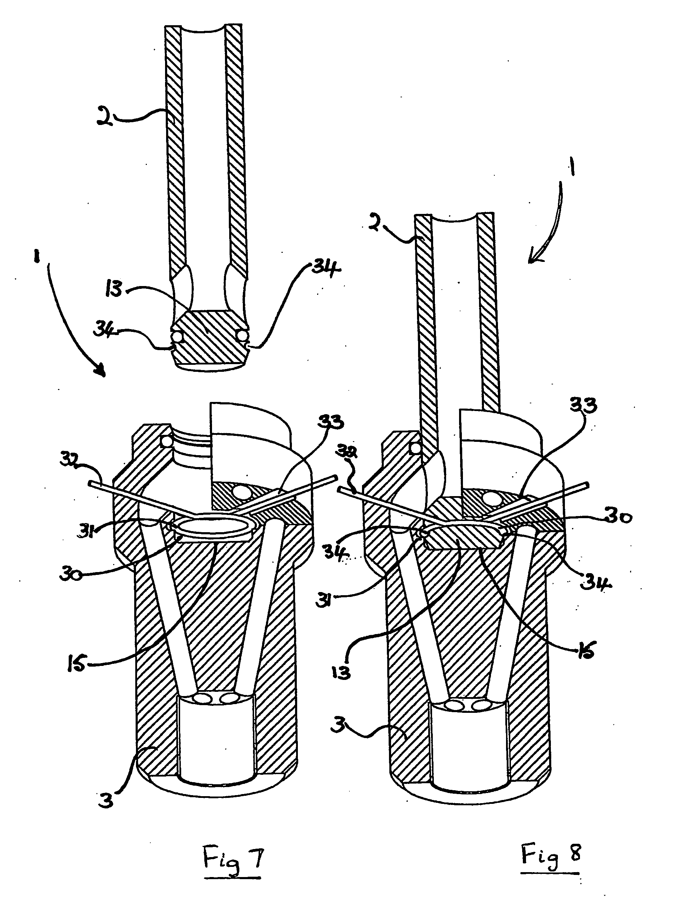

Referring now to Figures 7 and 8, these illustrate a coupling assembly 1 in accordance with a third embodiment of the present invention. In the third embodiment the pin and passage arrangement of the first and second embodiments has been replaced with a circular resilient ring of radially variable diameter 30 housed within the female coupling member 3.

Ring 30 fits within a groove 31 located within the inner circumference of the inner recess 15. The ring 30 is formed as part of a spring, and at each end arms 32 extend through passages 33 to the outside of the female coupling member 3. Ring 30 is arranged to be biased radially inwards, with arms 32 being biased apart. Passages 33 are sized such that arms 32 can be moved around the circumference of the female coupling member. By drawing arms 32 together the radius of the ring can be temporarily increased to allow the passage of the end portion 13 of the male coupling member 2. The end portion 13 of the male coupling member 2 is shorter than in the previous embodiments due to the absence of the pin fastening. End portion 13 further comprises an annular groove 34 arranged such that when the coupling assembly 1 is mated, ring 30 fits into annular groove 34 securing the male coupling member 2 in place. The male coupling member 2 can be released by pulling arms 32 together to temporarily increased the diameter of spring loaded ring 30.

An advantage of the ring 30, as opposed to the pin method of securing the coupling assembly, is that the male and female members of the coupling assembly are allowed to rotate, reducing stress in the connected fluid passages.

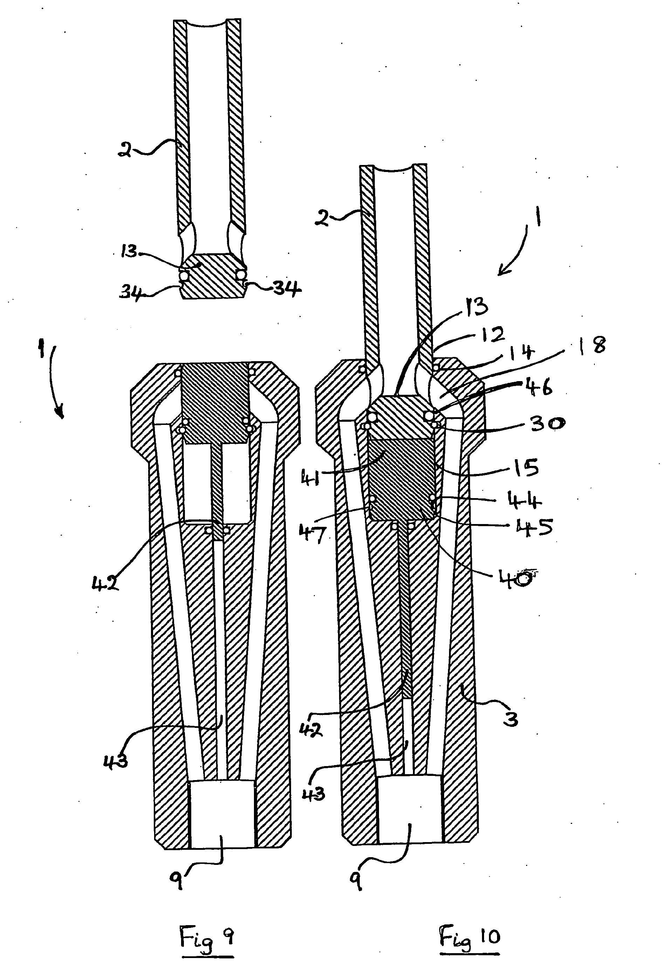

Figures 9 and 10 illustrate a fourth embodiment of the present invention wherein the female coupling member 3 further comprises a breakout valve 40. Breakout valve 40 comprises a piston 41 located within inner recess 15 and a piston rod 42 passing within passage 43 and connected to piston 41. Passage 43 connects with the first end 10 of the female coupling member 3, via central bore 9.

Piston 41 forms a close fit with inner recess 15 and is sealed by annular sealing ring 44 located within annular groove 45 on the circumference of piston 41. Piston 41 is slidable between a first position shown in Figure 10 in which the piston 41 is fully retracted into inner recess 15 and a second position shown in Figure 9 in which the piston 41 closes off the mouth of socket 12.

Piston 41 is sized such that when in the second position it extends across the whole of the mouth of the socket 12. Piston 41 also extends across (and thus seals) the outlet apertures of passages 18 when in the second position. Fluid seepage from around piston 41 is prevented from female coupling member 3 when the coupling assembly 1 is uncoupled by annular sealing ring 14, and also prevented from passing into the inner recess 15 via annular sealing ring 44.

Fluid within central bore 9 will pass into passage 43, and exert pressure upon the end of piston rod 42. This serves to bias piston 41 toward the second position. As the cross sectional area of the end of piston rod 42 is small in comparison with the cross sectional area of piston 42 the amount of force biasing piston 41 towards the second position is relatively small. Therefore, the insertion force needed by male coupling member 2 to displace piston 41 is reduced. When the male and female coupling members 2, 3 are uncoupled piston 41 is retain in the second position by annular sealing groove 47 engaging annular sealing ring 30.

When the end portion of male coupling member 2 is inserted into the female coupling member 3, and spring arms 32 (not shown in Figures 9 and 10) are brought together to release piston 41, the second end 13 forces piston 41 back to the first position. In the fourth embodiment of the present invention the depth of inner recess 15 is such that the second end 13 of male coupling member 2 fits inside the inner recess 15 adjacent to the piston 41. As previously, once coupled, annular spring loaded ring 30 can engage annular groove 34 on the circumference of male coupling member 2 to provide the required breakout strength.

Breakout valve 40 is therefore energised by the fluid pressure within the female coupling member 3 such that upon uncoupling the coupling assembly, the piston 41 seals the fluid conduit, preventing fluid from escaping from the female coupling member 3.

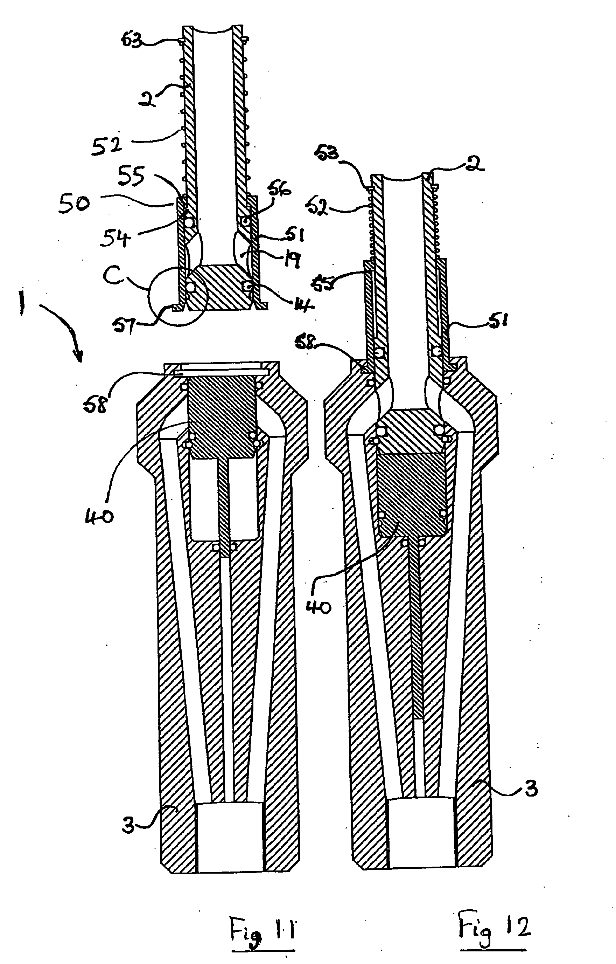

Figures 11 and 12 illustrate a fifth embodiment of the present invention wherein the male coupling member 2 further comprises a breakout valve 50. The female coupling member 3 comprises the same breakout valve 40 as in the fourth embodiment.

Breakout valve 50 comprises a collar 51 slidably mounted upon the male coupling member 2, and movable between a first position in which the collar 51 blocks off the outlet apertures of passages 19 within the male coupling member 2, and a second position in which the collar is retracted towards the first end 6 of the male coupling member 2 revealing passages 19.

Collar 51 is resiliently biased towards the first position, by spring 52 mounted upon the exterior of the male coupling member 2. A first end of the compression spring 52 is attached to the collar 51. A second end of the compression spring 52 is supported upon a detent 53 on the outside of the male coupling member. When the male and female coupling members 2, 3 are uncoupled fluid is thus prevented from escaping from the male coupling member 2 by collar 51.

The sidewall 4 of male coupling member 2 further comprises a step 54 (e.g. a change in external diameter), such that the diameter of the male coupling member increases towards the second end. Collar 53 comprises a complementary step 55 arranged such that motion of the collar 51 towards the second end of the male coupling member 2, under the bias of compression spring 52, beyond a predetermined point is prevented.

Collar 51 further comprises an annular sealing ring 56 arranged such that passages 19 are disposed between annular sealing rings 14 and 56. When collar 51 is in the first position, annular sealing rings 14 and 56 provide seals to prevent fluid from escaping from the male coupling member 2 via apertures from passages 19.

In this particular embodiment, the collar 51 further comprises a flange 57 radially extending from the collar, such that when the collar is in the first position the end of the flange 57 is level with the second end of the male coupling member 2 as is shown in Figure 11. Female coupling member 3 further comprises a corresponding groove 58 arranged such that when the coupling members 2, 3 are mated flange 57 is received within groove 58. Groove 58 extends around only part of the circumference of the mouth of socket 12 of the female coupling member 3. Flange 57 may be inserted in groove 58 by bring the male and female coupling members together at an angle transverse to the longitudinal axis of the coupling assembly 1.

Figure 12 illustrates the coupling members 2, 3 mated together. As the male coupling member 2 is pushed further into female coupling member 3, the end portion 13 of the male coupling member 2 displaces the piston 41 into the inner recess 15, and collar 51 is retracted towards the second position as the collar 5 is coupled via flange 57 to groove 58.

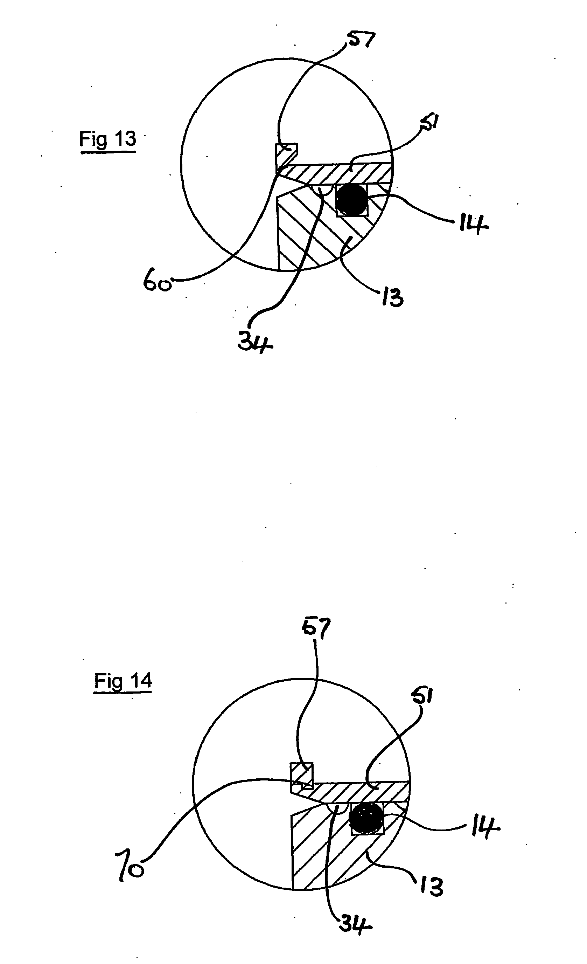

Figure 13 illustrates an enlarged portion of the male coupling member 2 of a sixth embodiment of the present invention. The enlarged portion corresponds to circled portion C of Figure 11. This illustrates the end portion 13 of male coupling member 2, collar 51, annular sealing ring 14, annular groove 34 for receiving annular spring loaded ring 30 and flange 57.

At least one portion of the groove 58 and flange 57 is frangible. In the embodiment shown in Figure 13 this is achieved by flange 57 being notched at least one point 60 where it joins collar 51. The effect is such that when the coupling members are mated and flange 57 is retained within groove 58, then when the force pulling male coupling member 2 out of female coupling member 3 exceeds a predetermined force, the flange 57 will break at notch 60. Notch 60 thus defines the breakout strength, by providing a stress point. The size of notch 60 and the materials flange 57 is formed from are chosen such that the predetermined force is precisely known, in order to control the breakout strength of valve 50.

Figure 14 illustrates an enlarged portion of the male coupling member 2 of a seventh embodiment of the present invention. The enlarged portion again corresponds to portion C of Figure 11. This illustrates the second end 13 of male coupling member 2, collar 51, annular sealing ring 14, annular groove 34 for receiving annular spring loaded ring 30 and flange 57.

Collar 51 further comprises an annular groove 70. Flange 57 is formed as an annular shear ring arranged to be received within groove 70. The effect is such that when the coupling members are mated and flange 57 is retained within groove 58, when the force pulling male coupling member 2 out of female coupling member 3 exceeds a predetermined force, then the flange 57 will shear off, leaving part of the flange retained in groove 70 and part in groove 58. As with the sixth embodiment the applied force at which flange 57 will shear may be controlled by careful choice of material, and/or dimensions, in order to control the break out strength of valve 50. Flange 57 this forms a shear ring, which may be readily replaced upon failure without the need to replace the rest of breakout valve 50 or male coupling member 2.

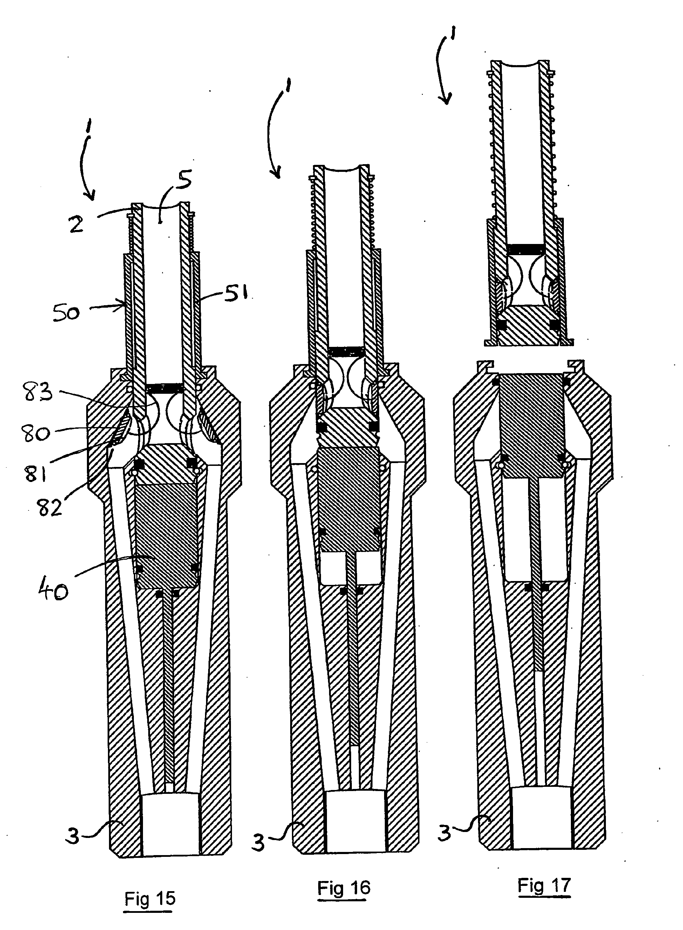

Figures 15, 16 and 17 illustrate an eighth embodiment of the present invention, wherein the male coupling member 2 further comprises shut off vales 80. Shut off valve 80 comprise discs of material 81 arranged to fit within the aperture outlets of passages 19, surrounded by annular sealing rings 82. When the discs 81 are located within the apertures of passages 19 (as illustrated in Figures 16 and 17) a fluid tight connection is formed, preventing fluid from escaping.

As the male coupling member 2 is retracted from female coupling member 3 during uncoupling, shut off valves 80 close passages 19, to prevent fluid leakage before collar 51 fully covers passages 19. This is schematically illustrated by the progression of Figures 15 to 17. Consequently, during both coupling and uncoupling procedures a coupling assembly 1 according to the eighth embodiment of the present invention will not leak fluid.

When uncoupled, shut off valves 80 are held closed by collar 51. When partially or fully inserted into the female coupling member 3 spring 83 within the male coupling member central bore 5 force discs 81 open, opening up the fluid openings 19, and allowing fluid to flow between the coupling members 2, 3.

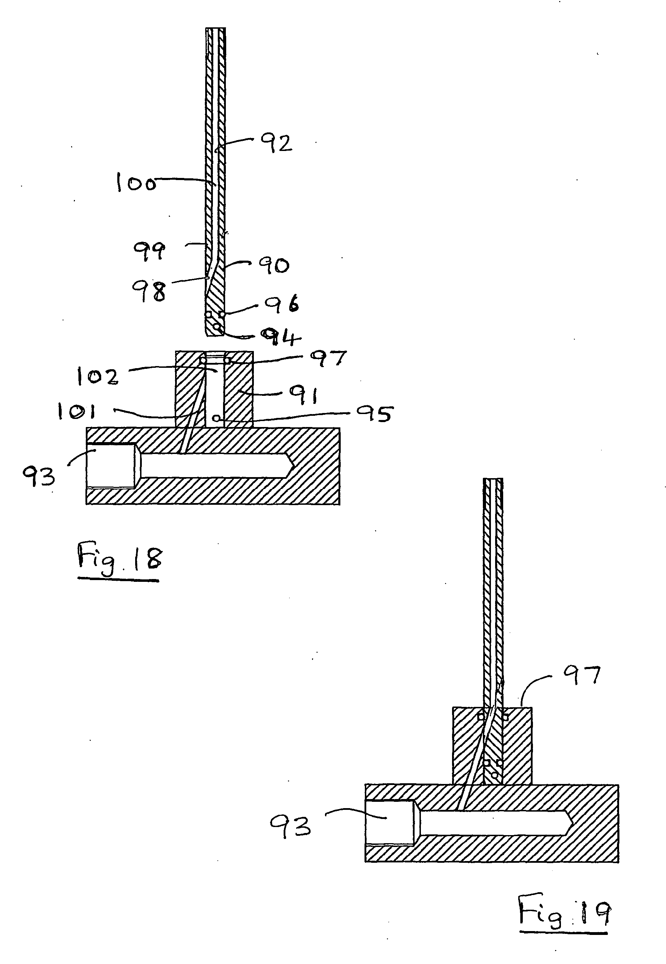

Figures 18 and 19 illustrate a ninth embodiment of the present invention, suitable for joining together fluid passages within a high pressure diesel system. Male coupling member 90 is shown coupled with female coupling member 91 in Figure 19. A fluid conduit is created between fluid passages 92 and 93. Passage 94 within the male coupling member 90 and passage 95 within female coupling member 91 when mated are aligned as shown in Figure 19. A pin may be inserted through passages 94 and 95 in order to provide pull out strength to the coupling.

Male coupling member 90 incorporates an annular sealing ring 96 located around an outside circumference, and female member 91 incorporates an annular sealing ring 97 within its internal circumference. The result is that once the coupling members are mated, a net force resisting separation of the male and female coupling members 90, 91 is created owing to the unequal cross sectional areas of the male and female coupling members 90, 91 as described above for the other embodiments.

Angled passage 98 in the sidewall 99 of male coupling member 90 provides a conduit from the central bore 100 of male coupling member 90 to an external surface of the male coupling member 90. Fluid conduit 101 connects fluid passage 93 to the inner recess 102 of the female coupling member 91. When male coupling member 90 is inserted into the recess 102 of female coupling member 91, passage 98 communicates with fluid conduit 101 allowing fluid to flow between the coupling members 90, 91.

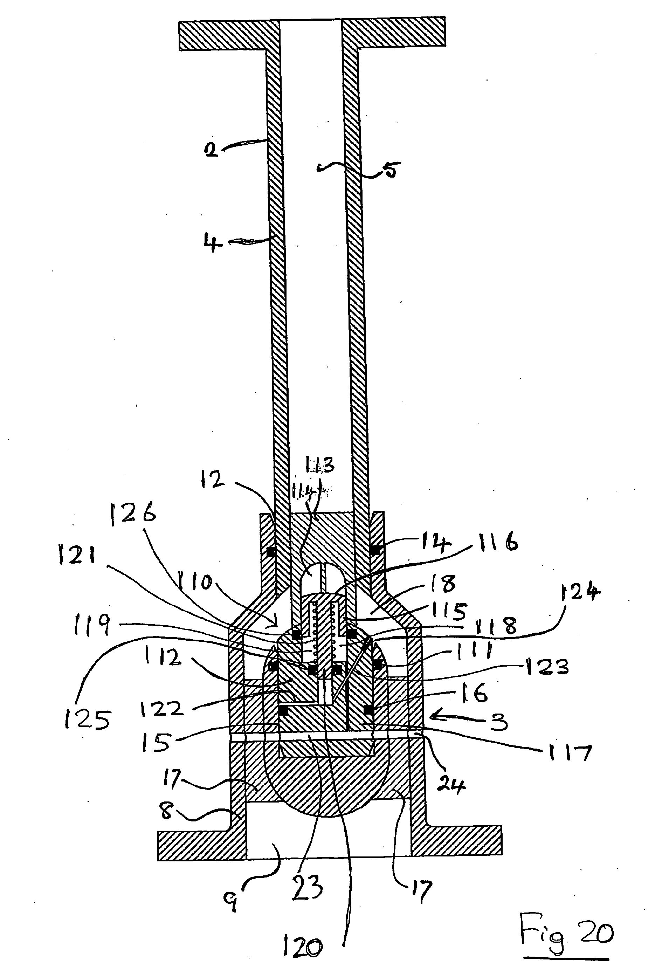

Referring now to Figure 20, this illustrates a tenth embodiment of the present invention, incorporating a hydraulic intensifier generally indicated by 110. In the previous embodiments the size of the net force resisting separation of the coupling members is dependent solely upon the difference in cross sectional area for the two effective hydraulic pistons, and the pressure of the fluid. In the present embodiment the size of the force resisting separation of the coupling members is increased by the hydraulic intensifier increasing the pressure of the fluid within part of the coupling assembly. Female coupling member 3 is generally similar to that of the first embodiment, with the exception that inner recess 15 further comprises an annular sealing ring 111 within its internal circumference. Socket 12 comprises annular sealing ring 14 around the mouth of the socket 12 as before. Female coupling member 3 further comprises central bore 9 and sidewalls 8, passages 24 and passages 17 connecting the central bore 9 with annular space 18 within the socket 12.

Male coupling member 2 comprises probe 112, which comprises annular sealing ring 16 as before. Male coupling member 2 further comprises sidewalls 4 and central bore 5. Probe 112 effectively forms a hydraulic piston within inner recess 15, sealed by annular sealing ring 111. Male coupling member 2 effectively forms an additional hydraulic piston with socket 12 of female coupling member 2. Inner recess 15 is vented to the ambient environment surrounding the coupling member as before. Passage 23 within probe 112 is arranged such that when the coupling members 2, 3 are mated as shown a pin (not shown) may be passed through passages 23 and 24 in order to provide breakout strength for the coupling assembly. In the tenth embodiment of the present invention the vent is combined with passage 24.

As both annular sealing rings 111 and 14 are mounted upon the inner circumference of female coupling member 3, and the probe 112 is of substantially uniform cross sectional area, the coupling is pressure balanced between these annular sealing rings, such that there is a zero net force.

Probe 112 comprises member 113 attached to the central bore 5. Member 113 is arranged such that it does not fill the whole cross section of the central bore and fluid may flow through it and on into the female coupling member 3. Member 113 comprises a piston cylinder 114, within which piston 115 is slidably mounted. Piston cylinder 114 is in communication with central bore 5 such that fluid pressure acts against the face 116 of piston 115.

Member 113 is integrally formed with probe end 117. Probe end 117 further comprises cavity 118, within which piston 115 may travel and piston cylinder 119, within which piston 120 is slidably mounted. Piston 120 is connected to piston 115, and together the pistons are biased away from probe end 117 by spring 121. Piston 120 is of a smaller cross sectional area than piston 115.

Cavity 118 is connected via passage 122 to passage 23, which as described above is combined with the vent. Consequently, cavity 118 is at the ambient pressure surrounding the coupling assembly. Piston cylinder 119 is connected via passage 122 to the annular space between probe 112 and the inner recess 15. Passage 122 is disposed between annular sealing rings 16 and 111. Piston cylinder 119 further connects with annular space 18 via passage 123. Passage 123 incorporates a one-way valve 124 such that fluid may pass from annular space 18 to the piston cylinder 119, but not in the opposite direction. Annular sealing rings 125 and 126 seal the connection between piston cylinder 119 and piston 120 and cavity 118 and piston 115 respectively.

Operation of the pressure intensifier 110 is now described. When the coupling members 2, 3 are coupled and fluid is introduced into the coupling assembly, fluid passes through valve 124 and passage 123 such that it fills piston cylinder 119. As the fluid pressure rises, fluid pressure bears against face 116 of piston 115, forcing piston 115 back against the action of spring 121. As pistons 115 and 120 are linked, piston 120 is also forced to move back into piston cylinder 119. Fluid is prevented from escaping from piston cylinder 119 by the action of the one-way valve 124.

As pistons 115 and 120 are linked they must carry the same force. For piston 115 the force is the product of the pressure of the fluid within the coupling assembly and the area of face 116. As piston 120 is smaller, the pressure within piston cylinder 119 must therefore be larger. Fluid within piston cylinder 119 and passage 122 exerts pressure in all directions.

A separation force is created corresponding to this fluid pressure multiplied by the cross sectional area of probe end 117 at the point of annular sealing ring 111. A force resisting separation of the coupling members is created corresponding to the fluid pressure multiplied by the cross sectional area of the probe end 117 at the point of annular sealing ring 16. As annular sealing ring 16 is part of the probe end 117 this second cross sectional area is larger than the first by an amount equal to the cross sectional area of annular sealing ring 16. Therefore, there is a net force resisting separation of the coupling members 2, 3.

In previous embodiments of the present invention, the fluid pressure flowing through the coupling assembly limits the net force resisting separation. In this particular embodiment, the net force resisting separating can be larger than would otherwise be achieved due to the action of the hydraulic intensifier 110. This is due to the action of the intensifier increasing the pressure of the fluid above that experienced in the rest of the coupling assembly, so as to result in a relatively large net force resisting the separation of the coupling assembly. It is understood that hydraulic intensifiers are know for other applications e.g. to increase the pressure delivered by a gas supply system. However, the present application of a hydraulic intensifier within a coupling assembly is believed to be novel.

This method of increasing the range of achievable net force resisting separation has utility in applications where the pressure of the fluid is low, for instance for coupling together low-pressure gas pipelines. Alternatively, it has utility in situations where it is likely that very large breakout forces may be applied to the coupling members, for instance in a pipeline connecting an oil tanker to a shore bound storage facility, in case the oil tanker shifts position.

In the above embodiments, it is assumed that the coupling assembly 1 comprises a single male member 2 mating with a corresponding female member 3. However, it will be appreciated that it is possible for the male member to be double-ended e.g. to effectively form two male members, for the mating together of two female coupling members.

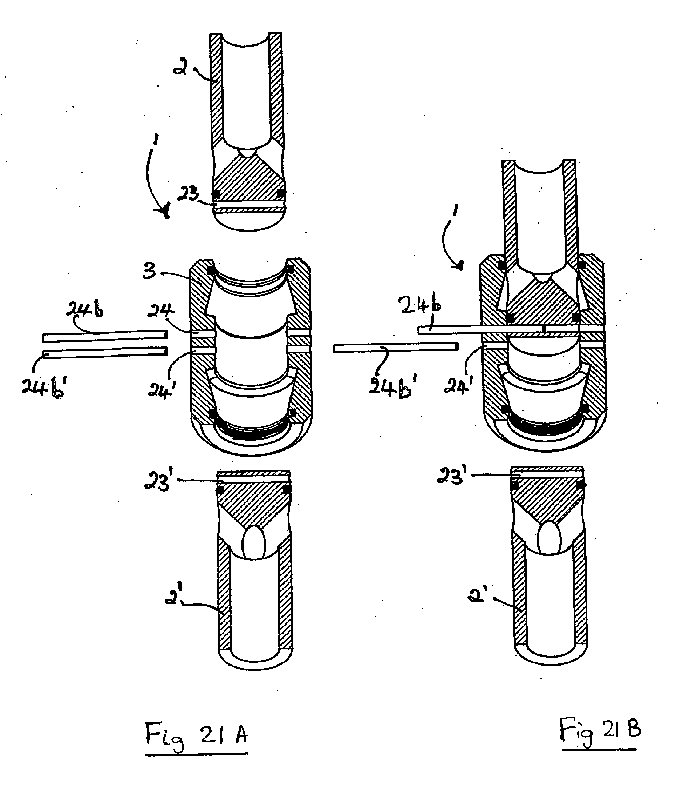

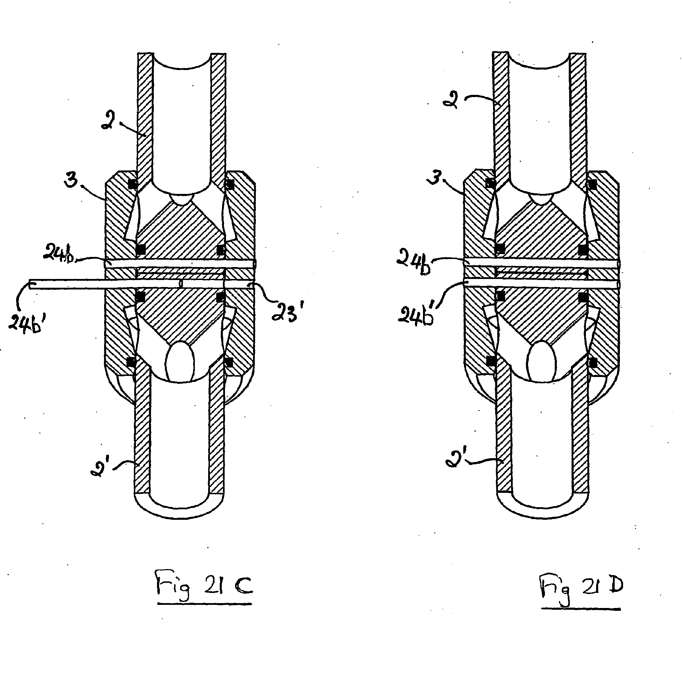

Alternatively, as indicated in Figures 21A-21D, the female coupling member 3 of the coupling assembly 1 can be double-ended. This allows the joining together of two male members 2, 2'. In other words, the female member 3 is not connected directly to a fluid passage, but is arranged for connection to a fluid passage via the additional male member 2'.

In the embodiment shown in Figures 21A-21D, both male members are of similar size and shape. However, it will be appreciated that in other embodiments, the double-ended female member 3 may be used to connect together different sizes and/or shape of male coupling member. In this embodiment, the first male coupling member is secured in position by pin 24b and passage 23, 24 arrangement, as previously described with reference to Figure 1. The second male coupling member 2' is similarly arranged to be secured via pin 24b' and passage 23', 24' arrangement.

Figures 21A-21D illustrate the sequence of events as the first male coupling member 2 is inserted into a corresponding socket in the female coupling member 3, and secured in position with the pin 24b. The second male coupling member 2' is then inserted into the respective socket in the female member 3, and secured in position with a respective pin 24b'.

In the above embodiment, it is envisaged that the conduit formed between the female coupling member 2 and the first male coupling member 2 is dimensioned such that fluid within the conduit exerts pressure on the internal surfaces to provide a net force resisting separation of these coupling members 2, 3. Additionally, in this particular embodiment, the conduit formed by the mating together of the female coupling member 3 and the second male coupling member 2' has internal surfaces dimensioned such that fluid within the conduit exerts pressure on the internal surfaces provide a net force resisting separation of the mated coupling members 2', 3.

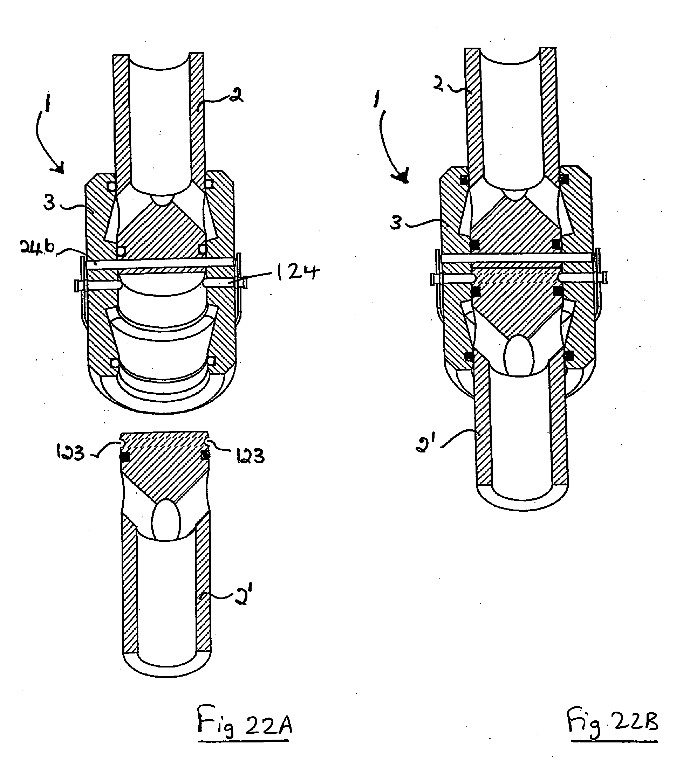

The various mechanisms have been described for providing retaining means to resist the uncoupling of the mated coupling members in the above embodiment. Any combination of these retaining means may be utilised in any coupling assembly. Figures 22A-23B illustrate a double-ended system, in which a first retaining means is utilised to secure a first male member 2 to the double-ended female member 3. The first retaining means utilises the pin 24b and the passage arrangement illustrated in Figures 21A-21D.

In this particular embodiment, the second male member 2' includes a passage 24', and hence may be located in position using a similar pin 24b' and female passage 23' configuration.

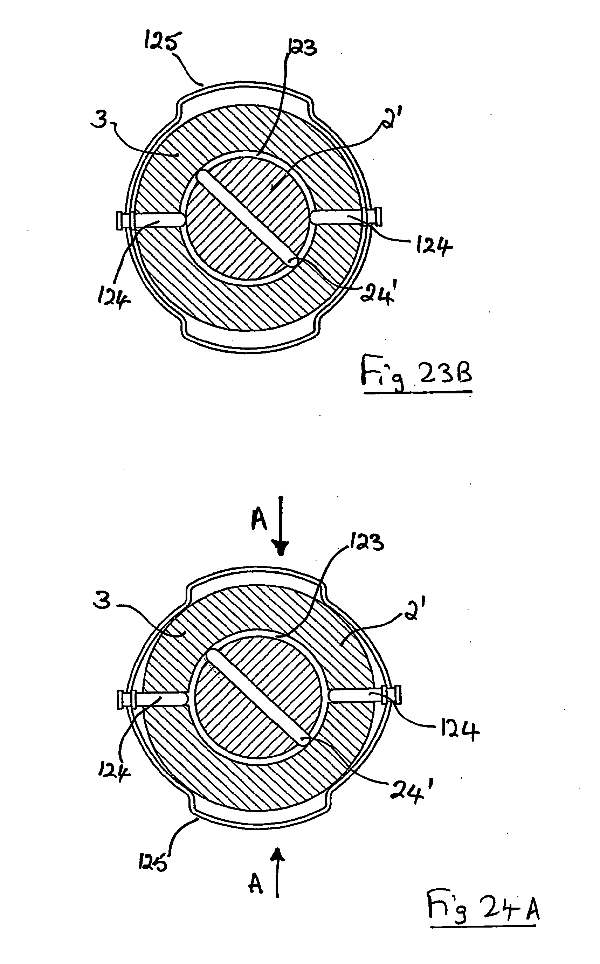

However, in this particular embodiment the female member 3 includes two pins 124 extending radially inwards, into the aperture within the female member. The pins 124 are radially resiliently biased by a spring 125. The spring extends around the outer circumference of the female member 3. The exterior surface of the male member 2' includes a groove 123. In this embodiment, the groove extends around the outer circumference of the male member 2'. The groove 123 is arranged such that when the male member 2' is mated with the female member 3, the groove is positioned to receive the pins 124, so as to retain the mated together members. The spring 125 is arranged such that when the spring is compressed in a direction orthogonal to the pins (as indicated by the arrows A in Figure 23A), the pins will retract from the groove 123. Figure 23A shows the pins 124 retracted from the groove 123, whilst Figure 23B shows the pins 124 extending into the groove 123.

In an alternative embodiment, not shown, it is envisaged that a male member and a female member are arranged to provide a fluid conduit for a particular, predetermined fluid. In order to prevent either the male member or the female member being inappropriately connected to a corresponding member arranged to carry a different fluid, then the size and/or shape of the members may be of a specific size for that fluid. Alternatively, the second end of the male coupling member may comprise one or more radially extending protrusions, of predetermined location, size and/or shape. The second end of the female coupling member 3 may comprise at least one corresponding recess, arranged to receive the protrusion(s) when the probe is received in said socket. The protrusion(s) is located on the male coupling member such that if it is not received within the corresponding recess, then the male member cannot mate with the female member. This ensures the male member can only mate with the female member having the correct corresponding recess(es).

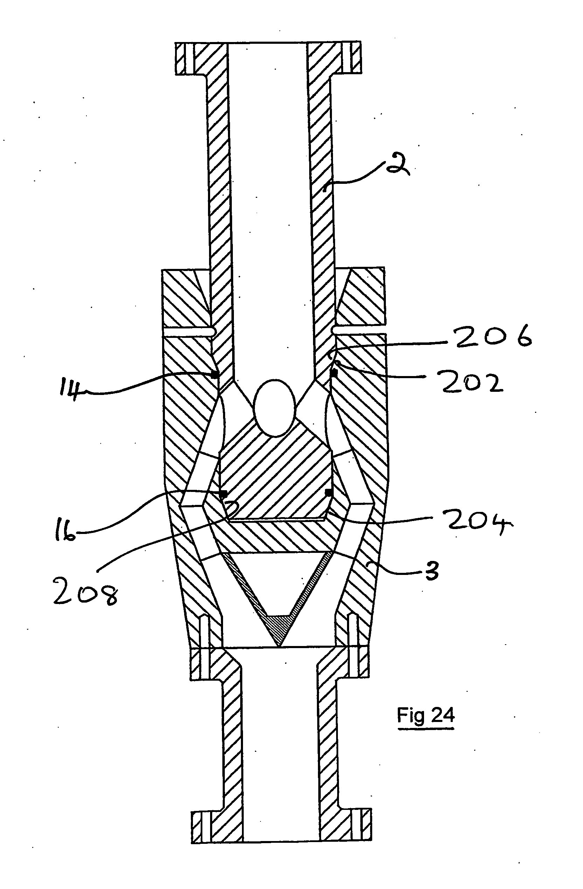

In a thirteenth embodiment shown in Figure 24, a coupling assembly 1 is shown generally in accordance with previous embodiments. It has male and female coupling members 2, 3 and includes a probe, which houses an external sealing ring 16, being inserted into a socket housing an internal sealing ring 14 and a fluid conduit extending between two fluid passages (not shown) at opposite sides of the coupling assembly 1 but further comprises means for resisting seal failure. The means for resisting seal failure is provided in order to stop the sealing rings from failing due to extrusion (by which we mean the forcing of the sealing rings out of the annular grooves and into the annular space between the probe and socket, under the pressure of the fluid acting on them). The means for resisting seal failure comprise angled wall sections 202, 204, 206 and 208 in the socket or probe, as shown in Figure 24. Each of these wall sections extends around the respective part, socket or probe, and so is of frusto-conical shape. In other embodiments these wall sections could be arcuate.

Wall sections 202 and 204 comprise part of the side walls of the socket formed in the female coupling member 3. The probe of the male coupling member 2 includes corresponding wall sections 206 and 208. These substantially follow the wall sections of the socket in order to maintain a substantially constant radial space between the probe and the socket.

Wall section 202 is positioned between the open end of the socket and the sealing ring 14 (the sealing ring which is carried by the socket and faces inwards), but is immediately adjacent to the sealing ring 14. Wall section 206 is aligned with wall section 202 when the male and female members are coupled together. The angled wall sections are such that the diameters of the socket / probe increase immediately beyond the sealing ring 14, towards the open end of the socket.

Wall section 208 is positioned between the distal end of the probe and the sealing ring 16 (the sealing ring which is carried by the probe and faces outwards), but is immediately adjacent to the sealing ring 16. Wall section 204 is aligned with wall section 208 when the male and female members are coupled together. The angled wall sections are such that the diameters of the socket / probe increase immediately beyond the sealing ring 16, towards the closed end of the socket.

The angled wall sections 202, 204, 206, 208 act so as to resist seal failure caused by extrusion of the sealing rings 14, 16 from their annular grooves.

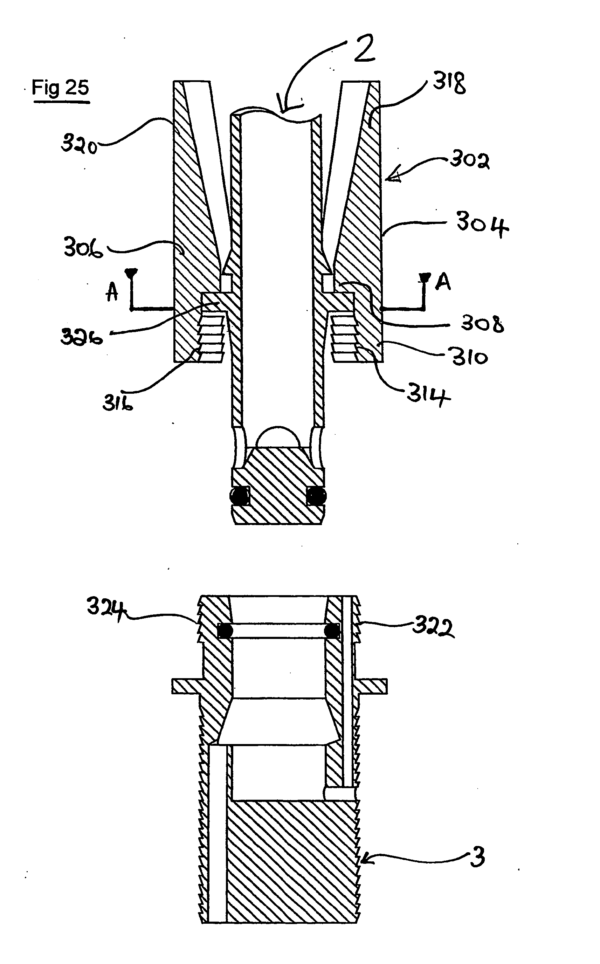

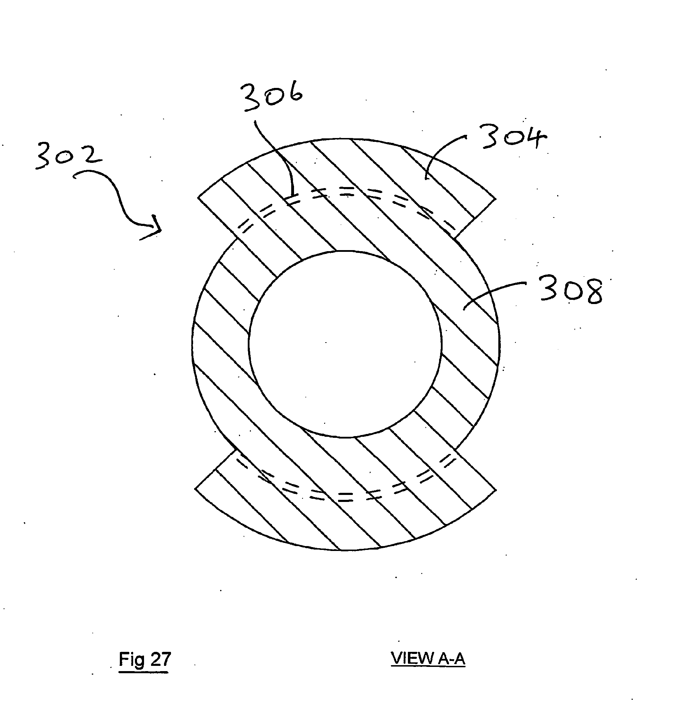

According to a fourteenth embodiment, the breakout strength of any previous embodiment is additionally or alternatively provided or supplemented by a securing means comprising a mechanical clip 302, as shown in Figures 25 and 27.

Referring to figure 25, the coupling assembly 1 comprises a male and female coupling members 2, 3 and includes a probe, which houses an external sealing ring, being inserted into a socket housing an internal sealing ring and a fluid conduit extending between two fluid passages (not shown) at opposite sides of the coupling assembly 1.

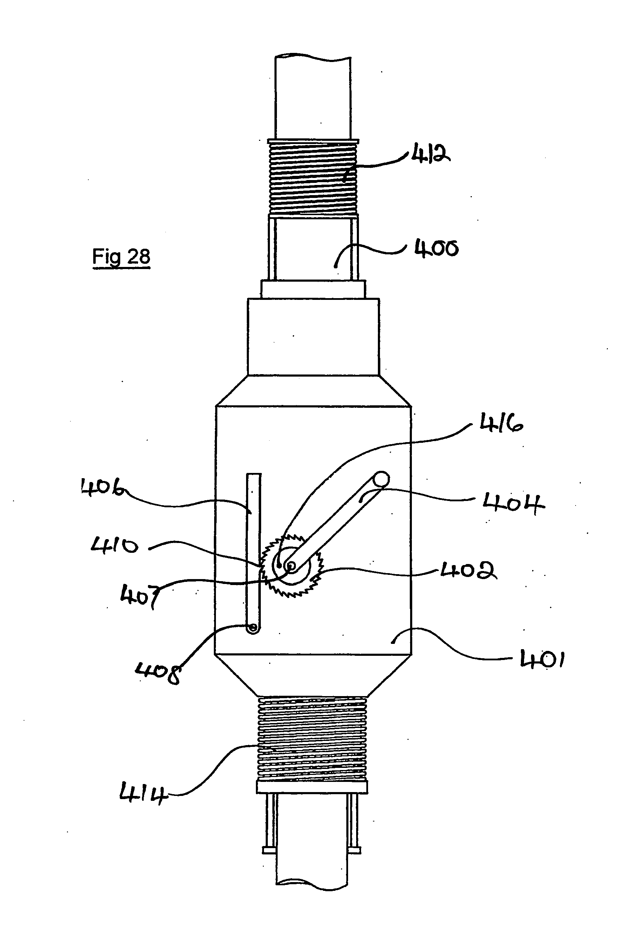

The mechanical clip 302 comprises two side sections 304, 306 and an annular connecting section 308, joining the side sections together at an intermediate position thereof. The side sections are substantially identical and each is substantially part-tubular in form. Each side section subtends an angle of about 90° about the annular connecting section 308, as shown in Figure 28. The side sections 302, 304 and the annular connecting section 308 comprise substantially one part, which is formed from a resilient plastics material.

Each side section 304, 306 is made up of a first end region 310, 312, which comprise engaging means 314, 316; and a second end region 318, 320 which functions as a lever. The first end regions 310, 312 project to one side of the annular connecting section 308 and the second end regions 318, 320 project to the other side of the annular connecting section 308.

The engaging means 314, 316 comprise a rack of circumferential teeth of generally sawtooth form, located on the inside of the first end regions 310, 312. The aligned outside surface of the female coupling member 3 includes a rack of circumferential teeth 322, 324 also of generally sawtooth form. In each rack of teeth, each tooth has a face that is orthogonal to the axis of the coupling assembly and a face that is oblique to the axis of the coupling assembly. The two racks of teeth face in opposite directions, such that on assembly of the mechanical clip onto the coupling assembly the inclined faces ride over each other, but uncoupling is resisted by the engagement together of the orthogonal faces.

The annular connecting section 308 extends between the two side sections 304, 306 and resembles a washer. It has upper and lower flat surfaces. The annular connecting section 308 carries the side sections and so has an outside diameter the same as the inside diameter of the side sections, and it has an internal diameter to permit it to fit around the outside diameter of the male member. A bottom face of the annular connecting section 308 locates on the male member 2 by abutment with a radial flange 326 that extends about the male coupling member.

Flange 326 comprises a lower face, which is orthogonal to the axis of the coupling assembly, and an oblique upper face.

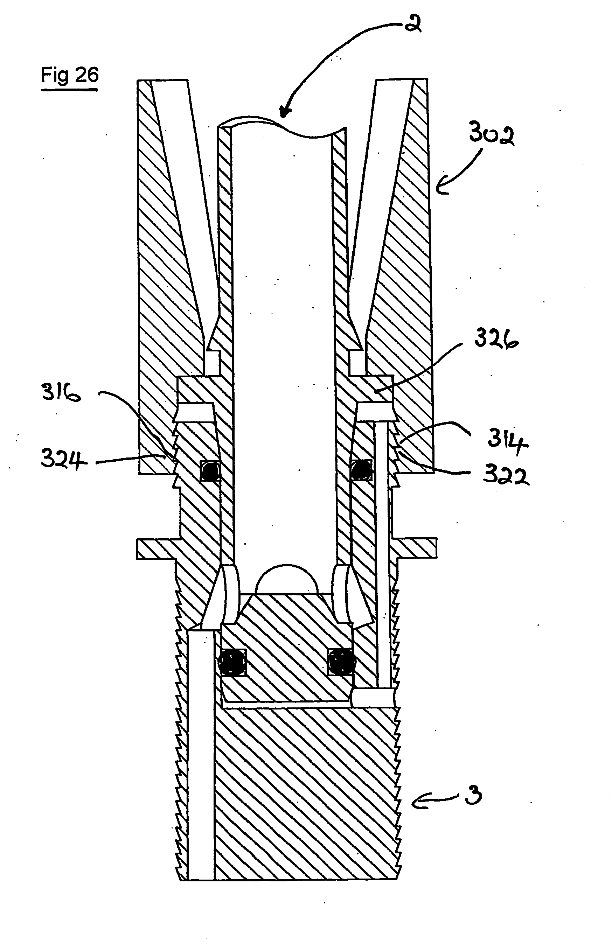

As shown in Figure 26 the clip provides breakout strength to the annular connecting section 308 when arranged with the lower surface of the annular connecting section 308 abutting a point on the oblique upper surface of flange 326 of the male member, and the engaging teeth 314, 316 of the mechanical clip locking together with the engaging teeth 322, 324 of the female member. The clip is removed from locking engagement with the female member by applying an inward force on the two levers 318, 320; for example by pressing them towards each other. Relative inward movement of the levers is enabled due to the side sections pivoting about the annular connecting section and resulting in the first end regions of the side sections moving apart from each other.

It is desirable to remove the clip in order to uncouple the coupling members under an un-mating force, for example for replacing parts or maintenance operations. However, in use, the clip restricts the un-mating of the coupling members under a separation force. The separation force may be applied deliberately, for instance by pulling the two fluid conduits apart, or alternatively may be applied accidentally, for instance one of the fluid passages may become snagged during movement and it is desirable for the coupling to break prior to the fluid passage.

In the event that a separation force is exerted on the male and female members, the annular connecting section of the clip will bend due to the geometry of the oblique upper face of flange 326 and this will result in greater inward pressure being applied on the engaging teeth 322, 324 of the female member due to a three point bending moment.

The breakout force is achieved by designing the clip to fail at a predetermined separation force. Failure occurs due to the engaging teeth 314, 316 of the mechanical clip failing, for example by shearing off.

In certain applications and when the coupling members break apart, which can be due to either a deliberate or accidental separation force or alternatively when un-mating the coupling members, it is advantageous that the male and female coupling members include valves, which shut off the ends of the fluid passages. Accordingly, figures 28 - 31 show an example of a fifteenth embodiment of the present invention.

Referring to figure 28, the coupling assembly, comprising male and female coupling members 400, 401, and having a longitudinal axis corresponding to the axis in which the male member is inserted or withdrawn, is shown in the mated position. A ratchet mechanism is arranged on an external face of the female coupling member and comprises: a toothed gear 402; a lever 404, which is fast to the gear 402; and a ratchet arm 406. The gear rotates about an axis transverse to the longitudinal axis and about an axle 407. The axle extends into the female coupling member and is connected to internal parts.

The ratchet arm 406 is pivoted at one end about pivot point 408 and includes a protrusion 410. The protrusion engages with the teeth of the gear 402. The teeth are sawtooth shape such that they slide over the protrusion when the gear is rotated in a first direction but lock with the protrusion when rotated in a second direction. The teeth are able to slide over the protrusion when rotated in the first direction due to reciprocating movement of the ratchet arm, which pivots away from the gear. The ratchet arm includes biasing means (not shown), which biases the arm towards the gear and ensures the protrusion re-engages with the gear after each tooth passes.

The internal parts, which the axle is connected to, comprise a first and second valve. Figure 28 also depicts a first biasing means comprising a spring 412, which is arranged about the male coupling member, and applies a closing force on the first valve and a second biasing means comprising a spring 414, which is arranged about the female coupling member and applies a closing force on the second valve. The springs are further described herein.

As will become clear, rotating the axle in the first direction, when the male and female members are mated, opens the valves against the springs 412, 414, which allows fluid to flow between the male and female coupling members. The valves are opened by applying a rotating force to the lever to rotate the gear in the first direction. In order to rotate the gear, the rotating force is required to overcome the biasing spring 412, 414. The gear turns in the first direction due to the reciprocating movement of the ratchet arm. When the rotating force is removed, the springs urge the valves to close, which in turn urges the gear to rotate in the second direction. In doing so the protrusion, which is biased toward the gear, locks with the teeth of the gear and resists the rotation and therefore the closing force of the valves. When fully open, the gear is restrained from rotating further in the first direction by abutment of the internal parts.

The arrangement of the internal parts is such that when a separation force is applied to the male and female members, the separation force adds to the closing force applied to the valves by the springs. This in turn applies an additional rotation force on the gear, urging it to rotate in the second direction. At a predetermined force the engagement of the protrusion with the gear is designed to fail, thus giving the assembly break-out strength. The failure of the protrusion may be through the protrusion shearing from the ratchet arm or by being forced away from the gear and out of engagement.

Alternatively and/or additionally the break-out strength may comprise arrangement of a break-out pin (not shown) to resist movement of the gear. The pin being designed to fail at a pre-determined break-out strength. The arrangement comprising the gear including a hole 416 and the female coupling member including a plurality of corresponding radially spaced blind holes. When the valves are in the open position the pin is inserted through the hole 416 and into the corresponding partial hole in the female member. The pin therefore resists rotation of the gear.

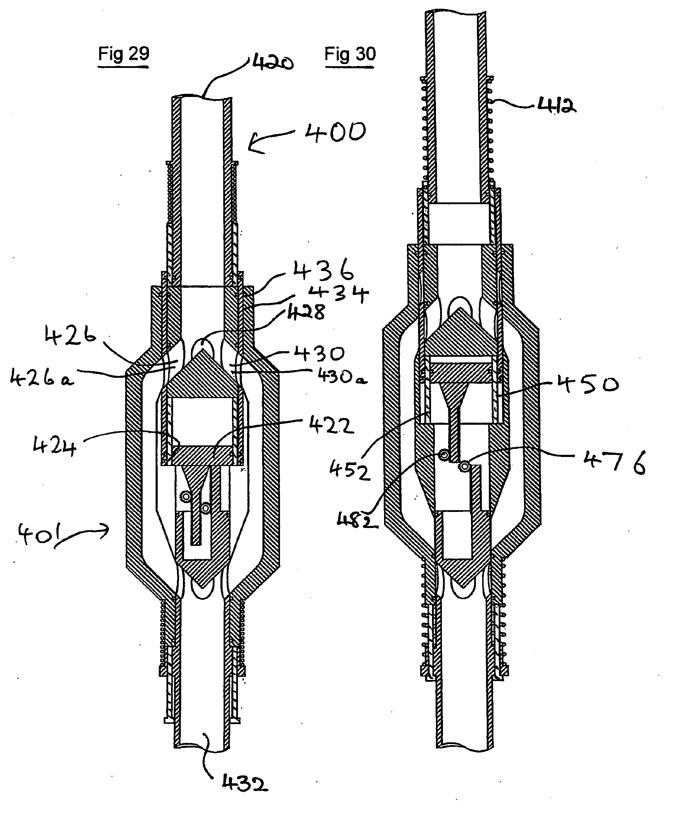

Figure 29 is a cross sectional view through the longitudinal axis of the coupling assembly. The majority of the coupling assembly is in accordance with previous embodiments and comprises the male and female members 400, 401. The male member similarly comprises: a first fluid end 420 arranged for connection to a fluid passage (not shown); a second end comprising a probe 422 with an external annular sealing ring 424 seated proximate the probe in a radial groove; and a fluid conduit that extends between the fluid passage and apertures 426, 428, 430 on the circumferential face of the probe, such that the apertures are arranged on the probe between the sealing ring and first end. The female member similarly comprises: a first end 432 arranged for connection to a fluid passage (not shown); a second end comprising a socket 434 with an internal sealing ring 436 seated proximate the socket in a radial groove; and a fluid conduit that extends between the fluid passage and apertures 426a, 430a, which, when mated in use are aligned to the apertures 426, 428, 430 of the probe and are arranged to be between the sealing ring 436 and first end 432.

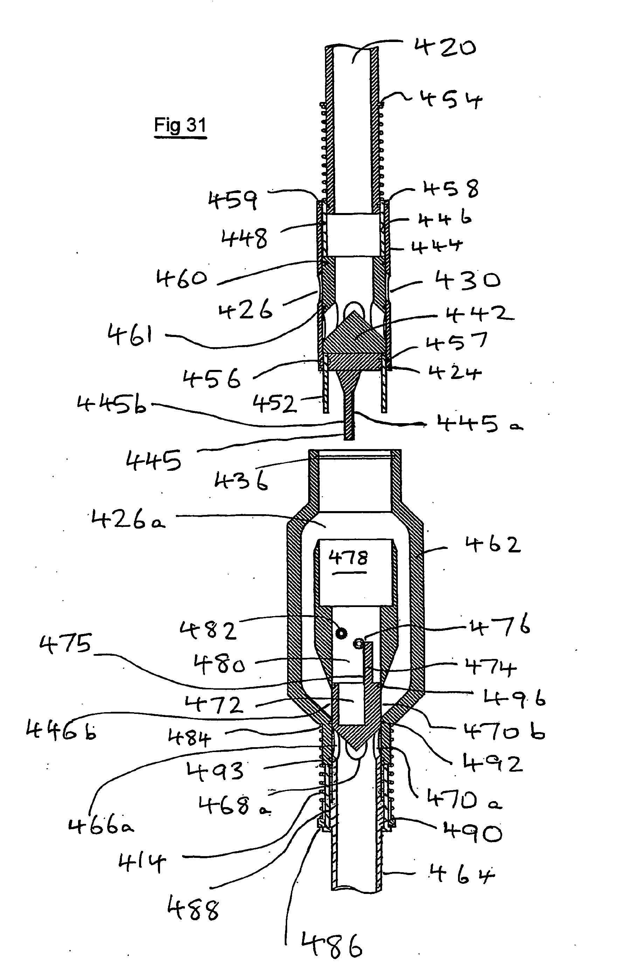

The male and female coupling members are shown unmated in Figure 31. The male coupling member further comprises an outer section 440 and an inner section 442. The inner section comprises the first valve. When unmated the valve 442 is in the closed position and prevents fluid egress from the probe.

The first end of the male coupling member comprises a circularly cylindrical rod, which is part of the outer section 440, and is coincident with the longitudinal axis of the coupling assembly. The first end includes a bore, which is coincident with the axis of the rod and comprises part of the fluid conduit. The second end of the male coupling member comprises the probe. The probe comprises a circularly cylindrical rod coincident with the longitudinal axis and is part of the outer section 440. The probe is of a larger external diameter to the first end and includes a bore coincident with the longitudinal axis. The bore of the second end interconnects with the bore of the first end but is of a larger diameter. The probe includes four apertures of which three 426, 428, 430 can be seen in Figure 29, which extend through side walls 444 of the probe. The distal end of the probe is closed. To aid manufacture it may comprise a separate closure section by means of which the closed end is sealed. The closure section includes an engaging means 445, which extends axially from the distal end of the probe. The engaging means comprises a first rack of teeth 445a and a second rack of teeth 445b, on opposing faces.

The valve section 442 comprises a main body, the outside face of which is circularly cylindrical. The main body fits snugly within the bore of the probe. The main body includes a fluid conduit that extends between an aperture on the first distal end of the main body and apertures 425b, 428b, 430b arranged on the circumferential face of the main body. The valve section 442 further comprises a first plurality of axially extending rod 446, 448 which extend from the first distal end of the main body, and a second plurality of axially extending rods 450, 452, which extend from an opposite distal end.

The rods 446, 448, 400, 452, may be separate parts to the main body but are permanently attached in position. The rods extend through corresponding holes in the closure section of the outer section 440 and the intersection of the first and second end of the outer section.

The spring 412 abuts with a radially extending flange 454 on the first end of the male member. The opposite end of the spring 412 abuts the distal end of the rods 448, 446 that extend from the first distal end of the valve's 442 main body. The spring 412 urges the valve to the closed position, in which the second distal end of the valve's 442 main body mates with the closure section of the probe. In the closed position the apertures 426, 428, 430 through the outer section are closed by walls 456 of the valve 442.

In the closed position annular sealing rings 456, 457, 458, 459 comprise a conventional seal between the outer section 440 and the rods 446, 448, 450, 452 and inhibit fluid from escaping the probe. Annual sealing rings 460, 461 comprise a conventional seal between the outer section and valve. The sealing rings 460, 461 are housed in annular recesses of the valve and arranged such that when the valve is closed they are either side of the apertures 426, 428, 430 and inhibit fluid from escaping from the probe out of the aperture.

Again referring to Figure 31, the female coupling member further comprises an outer section 462 and a valve section 464. The valve section comprises the first end of the female coupling member and is a circularly cylindrical rod. The rod includes a conduit that extends between a distal end and apertures 466a, 468a, 470a on a circumferential face of the rod. A distal end of the rod opposite the first end includes a recess 472 and an engaging means 474 comprising a rack of engaging teeth 475. The engaging teeth 475 engage with a cog 476. The cog rotates about an axis transverse to the longitudinal axis of the coupling assembly and is held in rotational arrangement with the outside section at its distal ends.

The outer section comprises a stepped bore that extends through the section from a first end to a second end. The larger bore 478 extends from the second end and comprises the socket in which the probe locates and the smaller bore 480 extends from the first end and houses the valve. The stepped bore is dimensioned such that the valve and probe fit snugly. The outer section further comprises a plurality of conduits that extend transversely and radially to the longitudinal axis of the coupling assembly and between the apertures 426a, 430a in the circumferential face of the socket and apertures 466b, 470b in the circumferential face of the small bore.

The cog 476 is arranged in the small bore 480 and between the large bore 478 and apertures 466b, 470b. Offset from the cog 476 is a second cog 482, which comprises the axel 407 that is connected to the ratchet mechanism.

The valve is housed in the small bore 480 of the first end of the outer section. The engaging teeth 475 of the engaging means 474 engaged with the cog 476. The biasing spring 414 acts between a hip 484 of the outer section and a radial flange 486 proximate the first end region of the valve. The spring urges the valve into the closed position, which is delimited by the abutment of headed pins 488, 490, which are secured to the outer section and extend radially from the distal end of the first end region. The headed pins 488, 490 extend through corresponding holes in the radial flange 486 and in the closed position abutment between the radial flange and the head of the pins resists the force of the spring.

Annual sealing rings 492, 493 are arranged so that in the closed position they are either side of the apertures 466a, 468a, 470a and create a seal between the bore 480 and valve such that fluid cannot egress from the apertures. Sealing rings 492, 493 are housed in annular grooves in the outer section.

The coupling assembly is mated by inserting the probe in to the socket as shown in Figure 30. If the outer body of the female coupling member is held stationary the probe is inserted by pushing the first end region of the male coupling member towards the female coupling member. At an intermediate position of insertion the distal ends of the rods 450, 452 abut the radial face of the stepped bore and the engaging teeth 445b of the engaging means 445 begin to engage with the cog 482. At the intermediate position the first valve 445 has not moved relative to the probe and so remains closed. At this stage the male and female members can be parted by a minimal force sufficient only to overcome the friction of the sealing rings 424, 436.

Coupling of the male and female members is continued by further relative movement of the outer section of the male member into the socket of the female member. The relative movement can be effected by applying a further pushing force on the first end of the male coupling member. Alternatively, the relative movement can be effected by rotating the lever of the ratchet mechanism in the first direction. In turn, this rotates the cog 482, which forces the outer section into the socket due to the engagement of the cog and teeth 445b. As the outer section moved relative to the socket the valve is restricted from moving with the probe due to the abutment of the rods 452, 450 and radial face of the stepped bore. Therefore the spring 412 compresses and the valve moves relative to the probe. The probe continues to be inserted into the socket between the intermediate position and a second intermediate position as shown in Figure 30. In the second intermediate position the annular sealing rings 460, 461 remain either side of the apertures 426, 430 such that the valve remains closed and the radial teeth 445a of the engaging means 445 begin to make contact with the cog 476.

In the second intermediate position, the male and female members are locked together by the action of the afore-described ratchet mechanism.

The valves are opened by continuing the relative movement of the probe within the socket between the second intermediate position and the open position shown in Figure 29. Preferably the relative movement is effected by further rotation of the ratchet mechanism in the first direction.

As the engaging means 445 of the probe moves, the engagement with the cog 476 rotates the cog such that it also effects relative movement of the valve within the female coupling member, thus also opening the valve within the female member. The relative movement of the valves within the coupling members is delimited in the open position by abutment of the distal end of the probe with the radial face of the stepped bore and also the abutment between the distal end of the engaging means of the valve within the female member with the distal end of the probe. In the open position the engaging means of the probe extends into the recess 480 of the valve 464.

In the open position the apertures 446a, 470a in the valve 464 within the female coupling member align with the apertures 466b, 470b in the outer section of the female coupling member. Further, the apertures 426b, 430b of the valve 442 within the probe align with both apertures 426, 430 of the probe and also apertures 426a, 430a of the female member. Said arrangement of apertures creates the fluid conduit between the first and second fluid passages similar to previous embodiments. Seals ensure the fluid is maintained within the fluid conduit.

As with previous embodiments, in use, the fluid conduit includes the net coupling force of the probe into the socket generated by the arrangement of annular seals 424 and 426. In use, a net force opening the second valve is also generated by the arrangement of seals 493 and 496, which are housed proximate the bore of the first end region of the under-section of the female member and the second distal end of the valve within the female member respectively.

If a separation force greater than the break-out force is applied to the coupling members, the break-out pin breaks and the ratchet mechanism disengages with the gear and the cog 482 becomes free to rotate. The springs urge both valves closed. Due to the engaging arrangement of the engaging means 474, 442 with cogs 482, 476, the probe cannot be separated from the socket until the valves are closed. Once the valves are closed and the engaging means 445 clear of the cog 483 the probe can be removed from the socket with minimal resistance.

The advantages of the present embodiment is that the valves are shut before the probe de-couples from the socket, meaning there is no escape of the fluid or pressurised expulsion of the probe from the socket.

It will be readily apparent to the appropriately skilled person that a coupling assembly in accordance with the present invention may be conveniently composed of plastics, metals, or any other materials that are know in the art. Further, the precise arrangement of the parts may be varied from those depicted within the accompanying drawings. For instance, it is not required that the coupling assembly be substantially symmetrical, and indeed for some applications it may be advantageous to have eccentrically shaped parts. The cross section of the male member and the corresponding female member socket need not be cylindrical, though this is the preferred embodiment as it allows for rotation of the male member(s) within the female member.

In the above examples, the area mismatch that results in the net force resisting separation of the coupling members is generally being provided by the appropriate positioning of the annular sealing rings within the coupling assembly. However, it will be appreciated that the net force resisting separation of the coupling members can alternatively be provided by an appropriate design of the internal surfaces of the coupling members. Further, the area mismatch that results in the net force resisting separation can be tailored to provide the desired pull out strength depending on the desired application.

For instance, in a typical application a pullout strength corresponding to 20kg (i.e. approximately 196 Newtons) is desired. This can be achieved by using a fluid pressure of approximately 2000 bar, with an area mismatch of approximately 1 mm², which can easily be provided by appropriate selection of the thickness of the annular sealing rings providing the area mismatch. However, the pullout strength of the coupling assembly (i.e. due to the net force resisting separation of the coupling members) can be selected to have any desired value. For instance, the net force resisting separation of the mated coupling members can be arranged to be any value greater than zero Newtons (N). Preferably, the net force is greater than 0.1 N. Preferably, the net force is less than 1 kN, and more preferably less than 100 N. The net force may be less than 10 N, or even less than 1 N. This net force will be dependent upon both the pressure carried by the fluid flowing through the coupling assembly, as well as the area mismatch. The area mismatch is preferably within the range 1 mm² to 1 m², with the predetermined fluid pressure flowing within the coupling assembly preferably being within the range 40 bar to 2000 bar. For instance, if the area mismatch is 1 mm², with the fluid pressure being 2000 bar, then this will result in a net force of approximately 196 N. An area mismatch of 1 cm², with a fluid pressure of 400 bar, will result in a net force of approximately 400 N, whilst a 1 m² area mismatch and a fluid pressure of 40 bar will result in a net force of approximately 4000 N.

The breakout strength of the assembly may be selected by appropriate choice of materials for the pin/spring loaded ring, and the breakout valves.

Further modifications, and applications, of the present invention will be readily apparent to the appropriately skilled person, without departing from the scope of the appended claims.

## Claims

1. A coupling assembly (1) for releasably interconnecting fluid passages, comprising:
a female coupling member (3), a first end (10) of which is arranged for connection to a first fluid passage, and a second end comprising a socket (12) extending along a first longitudinal axis, the female coupling member (3) further comprising an inwardly facing second annular sealing ring (14) proximate its second end (12);
a male coupling member (2), a first end (6) of which is arranged for connection to second fluid passage, and a second end of which comprises a probe (13) receivable in said socket (12), extending along a second longitudinal axis, the male coupling member (2) further comprising an outwardly facing first annular sealing ring (16) proximate its second end;
the female coupling member (3) further comprising an inner recess (15) within the socket (12), extending along the first longitudinal axis, and arranged to receive an end portion of the probe (13);
wherein the coupling members (2, 3) are arranged such that when the coupling members (2, 3) are mated said coupling members (2, 3) provide a conduit for fluid flow between the first and second fluid passages, and the first annular sealing ring (16) provides a seal between the probe (13) and the inner recess (15), and the second annular sealing ring (14) provides a seal between the probe (13) and the second end (12) of the female coupling member (3), the conduit therefore having internal surfaces dimensioned such that fluid within the conduit exerts pressure on the internal surfaces to provide a net force resisting separation of said mated coupling members (2, 3).

2. A coupling assembly according to claim 1, wherein: the conduit within the female coupling member (3) comprises a central bore (9) extending from the first end, and at least one passage (17) extending from the central bore (9), around the inner recess (15), to said second end (12); and the conduit within the male coupling member (2) comprises a central bore (5) extending from the first end, and at least one passage (19) extending from the central bore (5), transverse the second longitudinal axis to at least one aperture on a side of the probe (13).

3. A coupling assembly according to claim 2, wherein at least one of said passages (17, 19) is angled with respect to the longitudinal axis of the respective coupling member.

4. A coupling assembly according to any of one the preceding claims, wherein the coupling assembly (1) further comprises retaining means arranged to resist the uncoupling of the mated coupling members.

5. A coupling assembly according to any one of the preceding claims, wherein the female coupling member (3) further comprises a first breakout valve (40), the first breakout valve (40) comprising a piston (41) slidable between a first position in which it is retracted within the inner recess (15) and a second position in which the piston (41) closes the socket (12) of the female coupling member (3).

6. A coupling assembly according to claim 5, wherein the female coupling member (3) further comprises a passage (43) connecting the inner recess (15) with the first end (10) of the female coupling member (3), the first breakout valve further comprising a piston rod (42) passing through the passage (43), such that fluid pressure within the first end (10) will bias the piston (41) towards the second position.

7. A coupling assembly according to claim 2, wherein the male coupling member (2) further comprises a second breakout valve (50), the second breakout valve (50) comprising a collar (51) mounted upon the male coupling member (2), the collar (51) being slidable between a first position in which the collar (51) closes off the at least one aperture (19) in the probe (13), and a second position in which the collar (51) is retracted towards the first end (6) of the male coupling member (2) exposing the at least one aperture (19).

8. A coupling assembly according to any preceding claim, wherein the first end (10) of the female coupling member (3) comprises a second socket extending along a third longitudinal axis;
the coupling assembly further comprising a second male coupling member, a first end of which is arranged for connection to the first fluid passage, and a second end of which comprises a probe receivable in said second socket, extending along a fourth longitudinal axis, such that when said coupling members are mated said coupling members provided a conduit for fluid flow between the first and second fluid passages.

9. A coupling assembly according to claim 8, wherein the conduit has internal surfaces dimensioned such that fluid within the conduit exerts pressure on the internal surfaces to provide a net force resisting separation of the mated female coupling member and second coupling member.

10. A coupling assembly according to any preceding claim, wherein: immediately adjacent to the external sealing ring (16) the probe (13) tapers towards its distal end, and wherein when mated the surface (204) of the socket facing the taper (208) of the probe also tapers; and immediately adjacent to the internal sealing ring (14) the socket tapers towards its open end, and wherein when mated the surface (206) of the probe facing the taper (202) of the socket also tapers.

11. A coupling assembly according to any previous claim, wherein the male member (400) comprises at least one aperture (426, 428, 430) in the circumferential face of the probe and includes a valve (442) which prevents fluid egress from the aperture in a closed position and allows fluid egress from the probe in an open position, and the socket (434) includes at least one aperture (426a, 430a) in the circumferential wall and the fluid conduit extends between said aperture and the first end of the female member, wherein the female member includes a valve (464) which prevents fluid egress from the aperture in the socket when in a closed position and allows fluid egress in an open position.

12. A method of releasably interconnecting fluid passages by inserting a male coupling member (2) into a corresponding female coupling member (3), the female coupling member (3) having a first end (10) connected to a first fluid passage, and a second end comprising a socket (12) extending along a first longitudinal axis and having a proximal second, internal, sealing ring (14), the socket (12) including an inner recess (15), extending along the first longitudinal axis; the male coupling member (2) having a first end (6) connected to a second fluid passage, and a second end comprising a probe (13) receivable in said socket (12), extending along a second longitudinal axis and having a proximal first, external, annular sealing ring (16); the method comprising:
inserting the probe (13) into said socket (12), so as to provide a conduit between the first and second fluid passages, wherein the first annular sealing ring (16) provides a seal between the probe (13) and the inner recess (15), and the second annular sealing ring (14) provides a seal between the probe (13) and the second end (12) of the female coupling member (3), the conduit therefore having internal surfaces dimensioned such that fluid within the conduit exerts pressure on the internal surfaces to provide a net force resisting separation of said mated coupling members (2, 3).

13. A method of releasably interconnecting fluid passages comprising mating male and female members (2, 3) of a coupling assembly (1), wherein the coupling assembly is according to that claimed in any of claims 1 - 11.

## Patentansprüche

1. Kupplungsvorrichtung (1) zum lösbaren Verbinden von Fluidleitungen, umfassend:
ein weibliches Kupplungsteil (3), dessen erstes Ende (10) zur Verbindung mit einer ersten Fluidleitung angeordnet ist und ein zweites Ende, umfassend einen Ansatz (12), welcher sich entlang einer ersten Längsachse erstreckt, wobei das weibliche Kupplungsteil (3) weiters einen nach innen gerichteten zweiten ringförmigen Dichtungsring (14) nahe seinem zweiten Ende (12) umfasst;
ein männliches Kupplungsteil (2), dessen erstes Ende (6) zur Verbindung mit einer zweiten Fluidleitung angeordnet ist und dessen zweites Ende einen Fühler (13) aufweist, der in dem genannten Ansatz (12) aufgenommen werden kann, der sich entlang einer zweiten Längsachse erstreckt, wobei das männliche Anschlussteil (2) weiters einen nach außen weisenden ersten ringförmigen Dichtungsring (16) nahe seinem zweiten Ende aufweist;
wobei das weibliche Kupplungsteil (3) weiters eine innere Ausnehmung (15) im Ansatz (12) aufweist, welcher sich entlang der ersten Längsachse erstreckt und welcher angeordnet ist, einen Endbereich des Fühlers (13) aufzunehmen;
wobei die Kupplungsteile (2, 3) so angeordnet sind, dass wenn die Kupplungsteile (2, 3) miteinander verbunden sind, die Kupplungsteile (2, 3) eine Leitung für einen Fluidfluss zwischen der ersten und der zweiten Fluidleitung bilden, und der erste ringförmige Dichtungsring (16) eine Dichtung zwischen dem Fühler (13) und der inneren Ausnehmung (15) bildet, und der zweite ringförmige Dichtungsring (14) eine Dichtung zwischen dem Fühler (13) und dem zweiten Ende (12) des weiblichen Kupplungsteils (3) bildet, weswegen die Leitung innere Oberflächen hat, welche so dimensioniert sind, dass ein Fluid in der Leitung Druck auf die inneren Oberflächen ausübt, um eine resultierende Kraft aufzubauen, welche einer Trennung der genannten zusammengesetzten Kupplungsteile (2, 3) entgegenwirkt.

2. Kupplungsvorrichtung nach Anspruch 1, wobei: die Leitung im weiblichen Kupplungsteil (3) eine zentrale Bohrung (9) umfasst, welche sich vom ersten Ende erstreckt, und zumindest eine Durchgangsbohrung (17) umfasst, welche sich von der zentralen Bohrung (9) um die innere Ausnehmung (15) zum genannten zweiten Ende (12) erstreckt und die Leitung im männlichen Kupplungsteil (2) eine zentrale Bohrung (5) umfasst, welche sich vom ersten Ende erstreckt und zumindest eine Durchgangsbohrung (19) umfasst, welche sich von der zentralen Bohrung (5) quer zur zweiten Längsachse zu zumindest einer Öffnung auf einer Seite des Fühlers (13) erstreckt.

3. Kupplungsvorrichtung nach Anspruch 2, wobei zumindest eine der genannten Durchgangsbohrungen (17, 19) bezüglich der Längsachse des jeweiligen Kupplungsteils abgewinkelt ist.

4. Kupplungsvorrichtung nach einem der vorhergehenden Ansprüche, wobei die Kupplungsvorrichtung (1) weiters Befestigungsmittel aufweist, welche angeordnet sind, um dem Entkuppeln der verbundenen Kupplungsteile zu widerstehen.

5. Kupplungsvorrichtung nach einem der vorhergehenden Ansprüche, wobei das weibliche Kupplungsteil (3) weiters ein erstes Druckventil (40) umfasst, wobei das erste Druckventil (40) einen Kolben (41) aufweist, der zwischen einer ersten Position, in welcher er in das Innere der inneren Ausnehmung zurückgezogen ist, und einer zweiten Position, in welcher der Kolben (41) den Ansatz (12) des weiblichen Kupplungsteils (3) verschließt, verschiebbar ist.

6. Kupplungsvorrichtung nach Anspruch 5, wobei das weibliche Kupplungsglied (3) weiters eine Durchgangsbohrung (43) umfasst, welche die innere Ausnehmung (15) mit dem ersten Ende (10) des weiblichen Kupplungsteils (3) verbindet, wobei das erste Druckventil (40) weiters eine Kolbenstange (42) umfasst, welche durch die Durchgangsbohrung (43) verläuft, sodass der Flüssigkeitsdruck im ersten Ende (10) den Kolben (41) in die zweite Position drückt.

7. Kupplungsvorrichtung nach Anspruch 2, wobei das männliche Kupplungsteil (2) weiters ein zweites Druckventil (50) umfasst, wobei das zweite Druckventil (50) einen Kragen (51) aufweist, der auf dem männlichen Kupplungsteil (2) angebracht ist, wobei der Kragen (51) zwischen einer ersten Position, in welche der Kragen (51) die zumindest eine Öffnung (19) im Fühler (13) verschließt, und einer zweiten Position, in welcher der Kragen (51) zum ersten Ende (6) des männlichen Kupplungsteils (2) zurückgezogen ist, verschiebbar ist, wobei die zumindest eine Öffnung (19) freigegeben ist.

8. Kupplungsvorrichtung nach einem der vorhergehenden Ansprüche, wobei das erste Ende (10) des weiblichen Kupplungsteils (3) einen zweiten Ansatz umfasst, welcher sich entlang einer dritten Längsachse erstreckt;
wobei die Kupplungsvorrichtung weiters ein zweites männliches Kupplungsteil aufweist, dessen erstes Ende zur Verbindung mit der ersten Fluidleitung geeignet ist, und dessen zweites Ende einen Fühler umfasst, der im genannten zweiten Ansatz aufgenommen werden kann, der sich entlang einer vierten Längsachse erstreckt, sodass, wenn die genannten Kupplungsteile miteinander verbunden sind, die genannten Kupplungsteile eine Leitung für einen Fluidfluss zwischen den ersten und zweiten Fluiddurchgangsbohrungen bilden.

9. Kupplungsvorrichtung nach Anspruch 8, wobei die Leitung innere Oberflächen hat, welche so dimensioniert sind, dass die Flüssigkeit in der Leitung auf die inneren Flächen einen Druck ausübt, um eine resultierende Kraft aufzubauen, welche der Trennung des weiblichen Kupplungsteils und des zweiten Kupplungsteils, welche miteinander verbunden sind, entgegenzuwirken.

10. Kupplungsvorrichtung nach einem der vorhergehenden Ansprüche, wobei: der Fühler (13) direkt neben dem äußeren Dichtungsring (16) zu seinem distalen Ende hin abgeschrägt ist, und wobei die Oberfläche (204) des Ansatzes, welche der Abschrägung (208) des Fühlers im zusammengebauten Zustand zugewandt ist, ebenfalls abgeschrägt ist; und der Fühler im zusammengebauten Zustand direkt neben dem inneren Dichtungsring (14) zu seinem offenen Ende hin abgeschrägt ist, und wobei die Oberfläche (206) des Fühlers, welche der Abschrägung (202) des Ansatzes im zusammengebauten Zustand gegenüber liegt, ebenfalls abgeschrägt ist.

11. Kupplungsvorrichtung nach einem der vorhergehenden Ansprüche, wobei das männliche Teil (400) zumindest eine Öffnung (426, 428, 430) an der Umfangsfläche des Fühlers umfasst und ein Ventil (442) umfasst, welches den Austritt von Flüssigkeit aus der Öffnung im geschlossenen Zustand verhindert und welches den Austritt von Flüssigkeit aus dem Fühler im offenen Zustand gestattet, und wobei der Ansatz (434) zumindest eine Öffnung (426a, 430a) in der Umfangswand aufweist und die Fluidleitung sich zwischen der genannten Öffnung und dem ersten Ende des weiblichen Teils erstreckt, wobei der weibliche Teil ein Ventil (464) umfasst, welches den Austritt von Flüssigkeit aus der Öffnung im Ansatz verhindert, wenn es sich im geschlossenen Zustand befindet, und den Austritt von Flüssigkeit im offenen Zustand gestattet.

12. Verfahren zum lösbaren Verbinden von Fluidleitungen durch Einsetzen eines männlichen Kupplungsteils (2) in ein entsprechendes weibliches Kupplungsteil (3), wobei das weibliche Kupplungsteil (3) ein erstes Ende (10) hat, welches mit einer ersten Fluidleitung verbunden ist und ein zweites Ende mit einem Ansatz (12) aufweist, der sich entlang einer ersten Längsachse erstreckt und einen proximalen zweiten inneren Dichtungsring (14) hat, wobei der Ansatz (12) eine innere Ausnehmung (15) umfasst, welche sich entlang der ersten Längsachse erstreckt; wobei der männliche Kupplungsteil (2) ein erstes Ende (6) hat, welches mit einer zweiten Fluidleitung verbunden ist, und ein zweites Ende mit einem Fühler (13) aufweist, welcher im genannten Ansatz (12) aufgenommen werden kann und welcher sich entlang einer zweiten Längsachse erstreckt und einen proximalen ersten, äußeren, ringförmigen Dichtungsring (16) hat; wobei das Verfahren umfasst:
Einsetzen des Fühlers (13) in den genannten Ansatz (12), um eine Leitung zwischen der ersten und zweiten Fluidleitung zu bilden, wobei der erste ringförmige Dichtungsring (16) eine Dichtung zwischen dem Fühler (13) und der inneren Ausnehmung (15) bildet, und der zweite ringförmige Dichtungsring (14) eine Dichtung zwischen dem Fühler (13) und dem zweiten Ende (12) des weiblichen Kupplungsteils (3) bildet, weswegen die Leitung innere Oberflächen hat, welche so dimensioniert sind, dass ein Fluid in der Leitung einen Druck auf die inneren Oberflächen ausübt, um eine resultierende Kraft aufzubauen, welche der Trennung der genannten verbundenen Kupplungsteile (2, 3) entgegenwirkt.

13. Verfahren zum lösbaren Verbinden von Fluidleitungen, umfassend zusammenpassende männliche und weibliche Teile (2, 3) einer Kupplungsvorrichtung (1), wobei die Kupplungsvorrichtung jener entspricht, welche in einem der Ansprüche 1 bis 11 beansprucht ist.

## Revendications

1. Ensemble de raccordement (1) pour interconnecter de manière amovible des passages pour un fluide, comprenant :
un élément de raccord femelle (3) dont une première extrémité (10) est adaptée pour une liaison avec un premier passage pour un fluide, et une deuxième extrémité comprenant une douille (12) s'étendant le long d'un premier axe longitudinal, l'élément de raccord femelle (3) comprenant de plus, côté intérieur, une deuxième bague d'étanchéité annulaire (14), à proximité de sa deuxième extrémité (12) ;
un élément de raccord mâle (2) dont une première extrémité (6) est adaptée pour une liaison avec un deuxième passage pour un fluide et dont une deuxième extrémité comprend une pointe (13) pouvant être reçue dans ladite douille (12), s'étendant le long d'un deuxième axe longitudinal, l'élément de raccord mâle (2) comprenant de plus, côté extérieur, une première bague d'étanchéité annulaire (16), à proximité de sa deuxième extrémité ;
l'élément de raccord femelle (3) comprenant de plus un évidement interne (15) situé dans la douille (12), s'étendant le long du premier axe longitudinal, et adapté pour recevoir une première portion d'extrémité de la pointe (13) ;
dans lequel les éléments de raccord (2, 3) sont agencés de telle sorte que, lorsque les éléments de raccord (2, 3) sont accouplés, lesdits éléments de raccord (2, 3) fournissent un conduit pour l'écoulement du fluide entre le premier et le deuxième passages pour un fluide, et la première bague d'étanchéité annulaire (16) fournit un joint étanche entre la pointe (13) et l'évidement interne (15), et la deuxième bague d'étanchéité annulaire (14) fournit un joint étanche entre la pointe (13) et la deuxième extrémité (12) de l'élément de raccord femelle (3), le conduit ayant par conséquent des surfaces intérieures dimensionnées de telle sorte que le fluide dans le conduit exerce une pression sur les surfaces intérieures afin d'offrir une force nette résistant à la séparation desdits éléments de raccord accouplés (2, 3).

2. Ensemble de raccordement selon la revendication 1, dans lequel : le conduit dans l'élément de raccord femelle (3) comprend un alésage central (9) partant de la première extrémité, et au moins un passage (17) allant de l'alésage central (9), autour de l'évidement interne (15), jusqu'à ladite deuxième extrémité (12) ; et le conduit dans l'élément de raccord mâle (2) comprend un alésage central (5) partant de la première extrémité, et au moins un passage (19) allant de l'alésage central (5), transversalement au deuxième axe longitudinal, jusqu'à au moins une ouverture sur un côté de la pointe (13).

3. Ensemble de raccordement selon la revendication 2, dans lequel au moins l'un desdits passages (17, 19) est en angle par rapport à l'axe longitudinal de l'élément de raccord correspondant.

4. Ensemble de raccordement selon l'une quelconque des revendications précédentes, dans lequel l'ensemble de raccordement (1) comprend en plus des moyens de retenue adaptés pour résister au désaccouplement des éléments de raccord quand ils sont accouplés.

5. Ensemble de raccordement selon l'une quelconque des revendications précédentes, dans lequel l'élément de raccord femelle (3) comprend en plus un premier clapet de coupure (40), le premier clapet de coupure (40) comprenant un piston (41) pouvant coulisser entre une première position dans laquelle il est rétracté dans l'évidement interne (15) et une deuxième position dans laquelle le piston (41) obture la douille (12) de l'élément de raccord femelle (3).

6. Ensemble de raccordement selon la revendication 5, dans lequel l'élément de raccord femelle (3) comprend en plus un passage (43) reliant l'évidement interne (15) à la première extrémité (10) de l'élément de raccord femelle (3), le premier clapet de coupure (40) comprenant de plus une tige (42) de piston parcourant le passage (43) de telle sorte que la pression du fluide dans la première extrémité (10) pousse le piston (41) vers la deuxième position.

7. Ensemble de raccordement selon la revendication 2, dans lequel l'élément de raccord mâle (2) comprend en plus un deuxième clapet de coupure (50), le deuxième clapet de coupure (50) comprenant un manchon (51) monté sur l'élément de raccord mâle (2), le manchon (51) pouvant coulisser entre une première position dans laquelle le manchon (51) obture ladite au moins une ouverture (19) dans la pointe (13), et une deuxième position dans laquelle le manchon (51) est rétracté vers la première extrémité (6) de l'élément de raccord mâle (2), révélant ladite au moins une ouverture (19).

8. Ensemble de raccordement selon l'une quelconque des revendications précédentes, dans lequel la première extrémité (10) de l'élément de raccord femelle (3) comprend une deuxième douille s'étendant le long d'un troisième axe longitudinal ;
l'ensemble de raccordement comprenant de plus un deuxième élément de raccord mâle dont une première extrémité est adaptée pour une liaison avec le premier passage pour un fluide, et dont une deuxième extrémité comprend une pointe pouvant être reçue dans ladite deuxième douille, s'étendant le long d'un quatrième axe longitudinal, de telle sorte que, lorsque lesdits éléments de liaison sont accouplés, lesdits éléments de raccord fournissent un conduit pour l'écoulement du fluide entre le premier et le deuxième passages pour un fluide.

9. Ensemble de raccordement selon la revendication 8, dans lequel le conduit possède des surfaces intérieures dimensionnées de telle sorte que le fluide à l'intérieur du conduit exerce une pression sur les surfaces intérieures afin d'offrir une force nette résistant à la séparation de l'élément de raccord femelle et du deuxième élément de raccord lorsqu'ils sont accouplés.

10. Ensemble de raccordement selon l'une quelconque des revendications précédentes, dans lequel : de manière immédiatement adjacente à la bague d'étanchéité externe (16), la pointe (13) s'amincit dans la direction de son extrémité distale, et dans lequel, lorsqu'elle est accouplée, la surface (204) de la douille faisant face à la diminution (208) de la pointe s'amincit elle aussi ; et, de manière immédiatement adjacente à la bague d'étanchéité intérieure (14), la douille s'amincit dans la direction de son extrémité ouverte, et dans lequel, lorsqu'elle est accouplée, la surface (206) de la pointe faisant face à la diminution (202) de la douille s'amincit elle aussi.

11. Ensemble de raccordement selon l'une quelconque des revendications précédentes, dans lequel l'élément mâle (400) comprend au moins une ouverture (426, 428, 430) dans la face circonférentielle de la pointe et comporte un clapet (442) qui, dans une position ouverte, empêche la sortie du fluide hors de la pointe, et la douille (434) comprend au moins une ouverture (426a, 430a) dans la paroi circonférentielle et le conduit pour le fluide s'étend entre ladite ouverture et la première extrémité de l'élément femelle, dans lequel l'élément femelle comprend un clapet (464) qui empêche la sortie du fluide par la sortie ménagée dans la douille lorsqu'il est dans une position fermée et qui autorise la sortie du fluide dans une position ouverte.

12. Procédé pour interconnecter de manière amovible des passages pour un fluide par insertion d'un élément de raccord mâle (2) dans un élément de raccord femelle correspondant (3), l'élément de raccord femelle (3) ayant une première extrémité (10) reliée à un premier passage pour le fluide, et une deuxième extrémité comprenant une douille (12) s'étendant le long d'un premier axe longitudinal, et ayant une deuxième bague d'étanchéité annulaire intérieure proximale (14), la douille (12) comportant un évidement interne (15) s'étendant le long du premier axe longitudinal ; l'élément de raccord mâle (2) ayant une première extrémité (6) reliée à un deuxième passage pour le fluide, et une deuxième extrémité comprenant une pointe (13) pouvant être reçue dans ladite douille (12), s'étendant le long d'un deuxième axe longitudinal et ayant une première bague d'étanchéité annulaire extérieure proximale (16), le procédé comprenant :
l'insertion de la pointe (13) dans ladite douille (12), afin de fournir un conduit entre le premier et le deuxième passages pour un fluide, dans lequel la première bague d'étanchéité annulaire (16) fournit un joint étanche entre la pointe (13) et l'évidement interne (15), et la deuxième bague d'étanchéité annulaire (14) fournit un joint étanche entre la pointe (13) et la deuxième extrémité (12) de l'élément de raccord femelle (3), le conduit ayant par conséquent des surfaces intérieures dimensionnées de telle sorte que le fluide dans le conduit exerce une pression sur les surfaces intérieures afin d'offrir une force nette résistant à la séparation desdits éléments de raccord accouplés (2, 3).

13. Procédé pour interconnecter de manière amovible des passages pour un fluide, comprenant des éléments mâle et femelle (2, 3) s'accouplant d'un ensemble de raccordement (1), dans lequel l'ensemble de raccordement est tel que revendiqué dans l'une quelconque des revendications 1 à 11.
